Europäisches Patentamt

European Patent Office

Office européen des brevets

(19)

(11) Numéro de publication: **0 229 558**
**B1**

(12) **FASCICULE DE BREVET EUROPEEN**

(45) Date de publication du fascicule du brevet:
08.08.90

(51) Int. Cl.⁵: **A01N 37/40**

(21) Numéro de dépôt: **86402719.8**

(22) Date de dépôt: **09.12.86**

(54) Produits herbicides à base d'esters de bromoxynil et/ou d'ioxynil.

(30) Priorité: **09.12.85 FR 8518225**

(43) Date de publication de la demande:
**22.07.87 Bulletin 87/30**

(45) Mention de la délivrance du brevet:
**08.08.90 Bulletin 90/32**

(84) Etats contractants désignés:
**AT BE DE ES GB GR IT NL SE**

(56) Documents cités:
**EP-A- 0 031 684**
**CH-A- 432 120**
**FR-A- 2 556 933**

(73) Titulaire: **COMPAGNIE FRANCAISE DE PRODUITS INDUSTRIELS, 28, Boulevard Camélinat, F-92233 Gennevilliers(FR)**

(72) Inventeur: **Schapira, Joseph, 32, rue Miollis, F-75015 Paris(FR)**
Inventeur: **Pecheur, Jacques, 95 Ter rue de Colombes, F-92400 Courbevoie(FR)**
Inventeur: **Vincent, Jacques, 21 F rue des Closeaux, F-78750 Mareil Marly(FR)**
Inventeur: **Droniou, Patrick, 5 Ter rue Tilly, F-92700 Colombes(FR)**
Inventeur: **Fournials, Jean-Paul, 24 Les Linandes Vertes, F-95000 Cergy(FR)**

(74) Mandataire: **Koch, Gustave et al, Cabinet PLASSERAUD 84, rue d'Amsterdam, F-75009 Paris(FR)**

**Description**

L'invention a pour objet des produits herbicides à base d'esters de bromoxynil et/ou d'ioxynil.

Les produits herbicides du genre en question comportent, à titre de matière active, des mélanges d'esters de bromoxynil et/ou d'ioxynil et se présentent sous la forme des solutions de ces esters dans des solvants, avantageusement en présence de produits tensio-actifs propres à les rendre dispersibles dans l'eau en vue de leur application par pulvérisation.

Ces solutions d'esters de bromoxynil et/ou d'ioxynil dans des solvants comportant des produits tensio-actifs sont désignés par le terme de "concentrés émulsionnables".

On connaît déjà des produits herbicides du genre en question à base de n-octanoate de dibromo-3,5-hydroxy-4-benzonitrile (ou n-octanoate de bromoxynil) et/ou de n-octanoate de diiodo-3,5-hydroxy-4-benzonitrile (ou n-octanoate d'ioxynil) ; l'application principale de ces produits réside dans la destruction des adventices dicotylédones en post-levée dans les cultures de céréales ; on rappelle par ailleurs que le n-octanoate de bromoxynil est un solide cireux de couleur crème et de point de fusion 45-46° lorsqu'il est pur et 36 à 40°C lorsqu'il est de qualité technique et que le n-octanoate d'ioxynil est un solide cireux de couleur crème à marron, de point de fusion 59-60°C lorsqu'il est pur et 50 à 55°C lorsqu'il est de qualité technique.

Ces produits herbicides présentent l'inconvénient, pour des raisons de comportement aux basses températures, de ne pas autoriser des concentrations, pour des produits de qualité commerciale, supérieures à 240 g d'équivalent bromoxynil ou ioxynil par litre car, à cette dernière concentration, les solutions correspondantes de n-octanoate de bormoxynil ou d'ioxynil cristallisent à -7°C et, par exemple à 480 g/l, la cristallisation débute dès 20°C.

Or, la température de cristallisation des solutions ou des concentrés émulsionnables d'ester de bromoxynil ou d'ioxynil est un facteur limitant pour la concentration de ces produits car, d'une part, ces produits sont souvent fabriqués et stockés en hiver et, d'autre part, un produit cristallisé est très difficile à reliquéfier et il reste de toute manière hétérogène et donc inapte à toute utilisation ultérieure.

Pour remédier à cet inconvénient, il a déjà été proposé, dans le cas des produits herbicides du genre en question qui sont à base de n-octanoate de bromoxynil (brevet français N° 84191489), d'incorporer auxdits produits une proportion substantielle d'heptanoate de bromoxynil, ce grâce à quoi il devient possible de disposer de produits contenant jusqu'à 500 g/l d'équivalent bromoxynil sans cristalliser à -7°C pour des propriétés herbicides très similaires à celles des produits à base de n-octanoate uniquement.

Il a également été proposé (brevet US 4 332 613) d'incorporer auxdits produits herbicides une proportion substantielle de n-butyrate de bromoxynil et/ou d'ioxynil. Ici encore, le point de cristallisation est abaissé à une valeur inférieure à -7°C pour des concentrations pouvant atteindre 600 g/l d'équivalent bromoxynil et/ou ioxynil. Des concentrations allant jusqu'à 800 g/l sont prévues mais non préférées car elles n'assurent pas une absence de cristallisation à -7°C.

La Société Demanderesse s'est fixée pour but, surtout, de faire encore mieux et de fournir des produits herbicides du genre en question qui, pour des concentrations en équivalent bromoxynil et/ou ioxynil supérieures à celles de l'art antérieur, présentent un point de congélation inférieur et au plus égal à celui des produits connus.

Et elle a trouvé que ce but pouvait être atteint par le biais de produits herbicides du genre en question comportant en solution, dans des solvants et de préférence en présence de produits tensio-actifs, des mélanges d'esters d'acides linéaires et d'acides ramifiés de bromoxynil et/ou d'ioxynil.

Ces produits présentent, de façon surprenante et inattendue, des caractéristiques de tenue au froid améliorées par rapport à celles des produits réalisés à partir d'octanoate de bromoxynil et/ou d'ioxynil seul ou en mélange avec les autres esters d'acides linéaires décrits dans les brevets identifiés ci-dessus.

Et de façon encore plus surprenante et inattendue, ces produits établis conformément à l'invention présentent des phytoactivités équivalentes à celles des produits de l'art antérieur en dépit du fait bien connu (voir par exemple l'article de B.J. Heywood paru sous le titre "Hydroxybenzonitrile Herbicides" dans le numéro du 19 novembre 1966 de la revue "Chemistry and Industry") que les esters d'acides ramifiés de bromoxynil et d'ioxynil présentent une phytoactivité très réduite, voire pratiquement nulle.

Il s'ensuit que les produits herbicides conformes à l'invention comportent en solution dans des solvants et de préférence en présence d'agents tensio-actifs, un mélange d'un ou plusieurs esters d'acides linéaires et d'un ou plusieurs esters d'acides ramifiés de bromoxynil et/ou un mélange d'un ou plusieurs esters d'acides linéaires et d'un ou plusieurs esters d'acides ramifiés d'ioxynil, les acides linéaires étant choisis dans le groupe comprenant les acides n-heptanoïque, n-octanoïque et l'acide n-butyrique et les acides ramifiés étant choisis dans le groupe comprenant les acides éthyl-2-hexanoïque et cékanoïc, la proportion d'esters d'acides linéaires de bromoxynil dans le mélange de ceux-ci avec les esters d'acides ramifiés de bromoxynil étant de 20 à 90%, de préférence de 30 à 80% molaire et la proportion d'esters d'acides linéaires d'ioxynil dans le mélange de ceux-ci avec les esters d'acides ramifiés d'ioxynil étant de 30 à 95% et, de préférence, de 40 à 85% molaire, la proportion en esters d'acides ramifiés représentant chaque fois le complément à 100%.

2

L'invention vise bien entendu, outre les susdits produits herbicides, les mélanges d'esters d'acides linéaires et d'acides ramifiés de bromoxynil et d'ioxynil proprement dits et qui en constituent la matière active et qui présentent des points de fusion notablement inférieurs à ceux du n-octanoate, des mélanges équimoléculaires n-octanoate/n-butyrate et n-octanoate/n-heptanoate et des composants des divers esters constituant les mélanges.

Elle vise en outre les fluides de pulvérisation appliqués sur le terrain et qui sont obtenus à partir des susdits produits herbicides conformément à l'invention par dilution ou émulsion dans l'eau; elle vise enfin un procédé de destruction des adventices par application des produits herbicides conformes à l'invention.

L'acide cekanoïc est commercialisé par la Société CDF Chimie sous le nom d'acide cekanoic CK 7; il est obtenu par synthèse et sa composition est la suivante:

Teneur en acides en $C_7$ 98,5% minimum
Teneur en acide n-heptanoïque $10 \pm 2\%$
Teneur en acides $C_7$ ramifiés $89 \pm 2\%$
Répartition des isomères:

- acide méthyl-2-pentanoïque 15 à 20%
- acide méthyl-2-hexanoïque 60 à 70%
- autres isomères en méthyl hexanoïque 5 à 10%.

Les esters de l'acide cekanoic CK 7 sont appelés plus loin cekanoates.

Pour préparer les susdits mélanges d'esters, il est possible soit de mélanger à l'état liquide et à chaud les divers esters préalablement synthétisés, soit d'estérifier l'ioxynil et/ou le bromoxynil successivement ou simultanément à l'aide des différents agents estérifiants, à savoir les chlorures ou anhydrides des acides considérés.

Les anhydrides et les chlorures de tous les acides mentionnés sont industriels et les estérifications sont réalisables sans difficulté particulière par l'homme de l'art.

Les produits herbicides conformes à l'invention se distinguent par des concentrations en équivalents ioxynil et bromoxynil plus fortes que ce qu'il était possible d'atteindre jusqu'à ce jour, tout en présentant des tenues au froid remarquables se traduisant par l'absence de cristallisation après une semaine de stockage à 0°C; ces concentrations sont de 100 à 900 g d'équivalent bromoxynil et de 100 à 1100 g d'équivalent ioxynil par litre.

Dans la pratique, la concentration en équivalent bromoxynil et/ou ioxynil est supérieure à environ 600 g/l et ne dépasse pas environ 900 g/l.

Un autre avantage des produits herbicides conformes à l'invention réside dans la diminution du coût de production des formulations d'esters de bromoxynil et/ou d'ioxynil par, d'une part, des coûts moindres de chauffage des esters, lors de la fabrication de la formulation, du fait du bas point de fusion du mélange des esters et, d'autre part, un coût moindre de matière première dans la mesure où l'on utilise pour une partie des acides ramifiés qui sont bon marché.

Un autre avantage réside dans le fait que les formulations qui peuvent être plus concentrées en matière active utilisent par conséquent moins d'ingrédients inertes, responsables de coûts, nécessitent moins d'emballages pour traiter une surface donnée et donc réduisent les coûts d'emballage, de transport et de stockage, ainsi que les problèmes d'élimination d'emballages usagés.

Les produits herbicides selon l'invention peuvent contenir également d'autres herbicides ayant une bonne solubilité dans les hydrocarbures comme par exemple les dérivés de la famille des biphényléthers dont le Bifénox (méthyl-(dichloro-2,4-phénoxy-nitro-2-benzoate), les dérivés de l'acide benzoïque dont le Dicamba (acide dichloro-3,6-méthoxy-2-benzoïque), les dérivés de l'acide picolinique dont l'acide dichloro-3,6-picolinique, les dérivés de triazines dont la cyanazine (chloro-4-éthylamino-6-triazin-1,3,5-yl-2-amino)-2-méthyl-2-propionitrile), les esters d'isooctanol ou de butylglycol de l'acide (dichloro-2-,4-phénoxy)-acétique, de l'acide (chloro-4-méthyl-2-phénoxy)-acétique, de l'acide ($\pm$) (chloro-4-méthyl-2-phénoxy)-2-propionique ou de l'acide ($\pm$) (dichloro-2,4-phénoxy)-2-propionique.

La quantité de ces autres herbicides dans ces produits herbicides liquides dépend de leur efficacité herbicide.

Par convention, dans ce qui suit, toutes les proportions entre esters sont exprimées en pourcentages molaires des esters.

Par exemple, pour une composition donnée, il est équivalent d'écrire qu'une formulation titre 900 g/l de bromoxynil dans des proportions molaires d'esters suivantes:

n-heptanoate de bromoxynil : 50 %
n-butyrate de bromoxynil : 20 %
éthyl-2-hexanoate de bromoxynil : 30 %
ou bien d'écrire que cette formulation titre :
450 g/l de bromoxynil sous forme d'ester n-heptanoïque
180 g/l de bromoxynil sous forme d'ester n-butyrique
270 g/l de bromoxynil sous forme d'ester éthyl-2-hexanoïque.

Les produits herbicides selon l'invention sont des produits liquides diluables à l'eau pour donner des

3

fluides de pulvérisation convenables pour l'application sur les plantes ; ils comprennent, outre les mélanges d'esters de bromoxynil et/ou d'ioxynil définis ci-dessus, un ou plusieurs solvants et des agents tensio-actifs ioniques ou non ioniques.

Comme solvants, on pourra employer des hydrocarbures de pétrole, notamment les fractions aromatiques et paraffiniques ; d'autres solvants que les solvants pétroliers, tels les huiles animales, végétales et synthétiques sont également susceptibles d'être retenus.

De préférence, on utilisera des huiles minérales à haute teneur en produits aromatiques et plus particulièrement celles ayant une teneur pondérale en produits aromatiques d'au moins 70 % et un point éclair supérieur à 50°C. Un solvant préféré est celui commercialisé par EXXON sous la marque SOLVESSO 200 et qui contient 99 % de produits aromatiques. On pourra également utiliser des alcools ayant une chaîne hydrocarbonée linéaire, ramifiée ou cyclique, composée d'au moins 6 atomes de carbone, des composés polyols comme par exemple l'éthylèneglycol, le butylglycol ou ceux commercialisés sous la marque DOWANOL par la Société DOW.

Comme agents tensio-actifs, on pourra utiliser des sulforicinoléates, des dérivés d'ammonium quaternaire, des produits à base de condensats d'oxyde d'éthylène avec de l'oxyde de propylène ou avec des alkylphénols, par exemple nonyl ou octyl, ou polyarylphénols, ou avec des huiles végétales saponifiées ou non ou encore avec des alcools droits ou ramifiés, par exemple l'alcool laurique. On pourra également utiliser des esters carboxyliques d'anhydrosorbitols éventuellement polyéthoxylés, des sels alcalins, alcalino-terreux ou d'ammonium d'esters sulfuriques, des dérivés sulfoniques à haut poids moléculaire, tels les lignosulfonates ou les alkylbenzène-sulfonates de sodium et de calcium. On pourra enfin également utiliser des sels alcalins, alcalino-terreux, d'ammonium ou d'amines d'acides carboxyliques.

Ces agents tensio-actifs seront utilisés de préférence à raison de 0,1 à 20 % en poids/poids, soit dans des hydrocarbures comme par exemple une huile minérale ayant un point éclair supérieur à 50°C et une teneur pondérale en produits aromatiques d'au moins 70 %, soit dans des alcools courts comme le méthanol, l'isopropanol ou l'isobutanol.

Les fluides de pulvérisation obtenus par dilution à l'eau des produits herbicides selon l'invention contiennent de 0,05 à 5 % en poids/volume d'un mélange d'esters linéaires et ramifiés de bromoxynil et/ou d'ioxynil et sont utilisés dans le procédé de destruction des adventices, conforme à l'invention, à des doses d'application herbicides de 50 g à 1 kg par hectare d'équivalent bromoxynil et/ou ioxynil.

Dans ce qui suit, on met tout d'abord en évidence, à l'aide des expériences I, II et III, les points de fusion avantageusement bas des mélanges d'esters linéaires et ramifiés de bromoxynil ou d'ioxynil constituant la matière active des produits herbicides conformes à l'invention et qui se traduisent par la bonne tenue au froid de ces derniers et on illustre ensuite par les exemples 1 à 9 un certain nombre de produits herbicides constituant des modes de réalisation avantageux de l'invention.

Expérience I

Les esters et mélanges d'esters de bromoxynil identifiés dans le tableau A sous les numéros 1 à 15, sont préparés par mélange, le cas échéant, des quantités appropriées des divers esters. Chaque ester ou mélange d'esters est ensuite fondu et la masse fondue est agitée pour la rendre homogène. Elle est ensuite refroidie rapidement à -10°C par refroidissement extérieur. Un échantillon de cristaux de la masse solide gelée ainsi obtenue est placé dans un tube capillaire qui est ensuite placé dans un tube de Thiele formant bain-marie (réf. Prolabo, capillaire : 09 224 914; tube de Thiele : 09 058 156). Le tube de Thiele permet une agitation par thermo-siphon. On élève doucement la température du bain-marie et on enregistre la température à laquelle un menisque apparaît pour la première fois, comme le point de fusion du mélange considéré.

Les mélanges d'esters d'acides linéaires et d'acides ramifiés sont optimisés et on retient pour chaque mélange la composition molaire assurant le plus bas point de fusion pour les constituants considérés. Cette température est indiquée dans le tableau A.

## TABLEAU A

| N° d'ester ou de mélange d'esters | Nature des esters | % molaires dans le mélange | Point de fusion (°C) |
|---|---|---|---|
| 1 | n-octanoate de bromoxynil | 100 | 37 |
| 2 | n-heptanoate de bromoxynil | 100 | 45 |
| 3 | n-butyrate de bromoxynil | 100 | 82 |
| 4 | éthyl-2-hexanoate de bromoxynil | 100 | 43 |
| 5 | cekanoate de bromoxynil | 100 | 27 |
| 6 | n-octanoate de bromoxynil<br>n-butyrate de bromoxynil | 50<br>50 | ( 24<br>( |
| 7 | n-octanoate de bromoxynil<br>n-heptanoate de bromoxynil | 50<br>50 | ( 26<br>( |
| 8 | n-heptanoate de bromoxynil<br>éthyl-2-hexanoate de bromoxynil | 50<br>50 | ( 14<br>( |
| 9 | n-heptanoate de bromoxynil<br>cekanoate de bromoxynil | 50<br>50 | ( 9<br>( |
| 10 | n-octanoate de bromoxynil<br>éthyl-2-hexanoate de bromoxynil | 50<br>50 | ( 7<br>( |
| 11 | n-octanoate de bromoxynil<br>n-heptanoate de bromoxynil<br>éthyl-2-hexanoate de bromoxynil | 40<br>20<br>40 | (<br>( 5<br>( |
| 12 | n-octanoate de bromoxynil<br>n-butyrate de bromoxynil<br>éthyl-2-hexanoate de bromoxynil | 40<br>20<br>40 | (<br>( 5<br>( |
| 13 | n-octanoate de bromoxynil<br>n-butyrate de bromoxynil<br>cekanoate de bromoxynil | 20<br>20<br>60 | (<br>( 5<br>( |
| 14 | n-heptanoate de bromoxynil<br>n-butyrate de bromoxynil<br>éthyl-2-hexanoate de bromoxynil | 50<br>20<br>30 | (<br>( 2<br>( |
| 15 | n-heptanoate de bromoxynil<br>n-butyrate de bromoxynil<br>cekanoate de bromoxynil | 40<br>20<br>40 | (<br>( 2<br>( |

Les mélanges 8 à 15, qui comportent tous une certaine proportion, ajustée d'une manière optimum pour chacun, d'esters d'acides ramifiés de bromoxynil, possèdent un point de fusion plus bas que les esters et mélanges d'esters 1 à 7 qui comprennent notamment les constituants des mélanges 8 à 15 pris isolément.

Expérience II

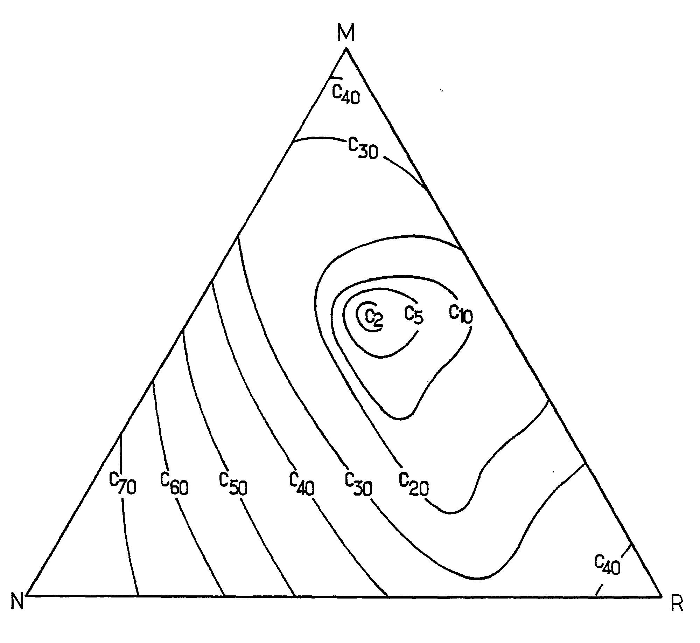

Afin de mieux expliciter la démarche adoptée pour définir les compositions optimisées retenues, on construit le diagramme représenté sur la figure 1/1 et qui permet de déterminer la zone des mélanges "n-heptanoate de bromoxynil/n-butyrate de bromoxynil/éthyl-2-hexanoate de bromoxynil" qui présentent le point de fusion le plus bas.

Le diagramme de cette figure se présente sous la forme d'un triangle équilatéral
- dont les sommets M, N, R représentent respectivement chacun des constituants du mélange, à savoir le n-heptanoate de bromoxynil (point de fusion 45°C), le n-butyrate de bromoxynil (point de fusion 82°C) et l'éthyl-2-hexanoate de bromoxynil (point de fusion 43°C),
- dont les côtés MN, NR et RM représentent respectivement tous les mélanges binaires obtenus à partir des produits représentés par les sommets "M et N", "N et R" et "R et M", et
- dont chacun des points P intérieurs de la surface du triangle représente un mélange ternaire dont la composition molaire en chacun des trois constituants est obtenue en faisant passer par P une parallèle à chacun des côtés du triangle jusqu'à intersection avec les deux autres côtés, ce qui fournit la proportion molaire en constituant représenté par le sommet opposé au côté par rapport auquel on a tracé la parallèle.

On procède comme pour l'expérience I par mélange de quantités pesées de chacun des trois esters et on réalise suffisamment de mélanges pour quadriller la surface du triangle et on détermine pour chacun de ces points, c'est-à-dire pour chacun des mélanges, le point de fusion de la même manière que dans l'expérience I ; pour matérialiser les côtés du triangle, on établit un certain nombre de mélanges binaires dont on détermine également les points de fusion.

On relie enfin les points représentatifs des mélanges de même point de fusion, ce qui fournit un certain nombre de courbes $C_{70}$, $C_{60}$ .....$C_2$ qui donnent la composition de tous les mélanges qui, pour la première, fondent à 70°C et ainsi de suite.

Dans le cas présent, ce sont les mélanges représentés par les points de la courbe $C_2$ qui ont le point de fusion le plus bas, à savoir 2°C.

Expérience III

Les esters et mélanges d'esters d'ioxynil identifiés dans le tableau B sous les numéros 16 à 24, sont préparés de la même manière que dans l'expérience I, le cas échéant, par mélange.

On mesure également, suivant le même principe que dans l'expérience I, les points de fusion et on retient pour chaque mélange la composition molaire assurant le plus bas point de fusion pour les constituants considérés.

<div align="center">

TABLEAU B

</div>

| N° d'ester ou de mélange d'esters | Nature des esters | % molaires dans le mélange | Point de fusion (°C) |
|---|---|---|---|
| 16 | n-octanoate d'ioxynil | 100 | 50 |
| 17 | n-heptanoate d'ioxynil | 100 | 68 |
| 18 | n-butyrate d'ioxynil | 100 | 118 |
| 19 | éthyl-2-hexanoate d'ioxynil | 100 | 66 |
| 20 | cekanoate d'ioxynil | 100 | 61 |
| 21 | n-octanoate d'ioxynil<br>n-butyrate d'ioxynil | 67<br>33 | ( 38<br>( |
| 22 | n-octanoate d'ioxynil<br>éthyl-2-hexanoate d'ioxynil | 50<br>50 | ( 33<br>( |
| 23 | n-octanoate d'ioxynil<br>n-butyrate d'ioxynil<br>cekanoate d'ioxynil | 30<br>20<br>50 | (<br>( 31<br>( |
| 24 | n-heptanoate d'ioxynil<br>n-butyrate d'ioxynil<br>cekanoate d'ioxynil | 37<br>18<br>45 | (<br>( 35<br>( |

Ici encore, les mélanges 22, 23 et 24 qui comportent tous une certaine proportion, ajustée d'une manière optimum pour chacun, d'esters d'acides ramifiés d'ioxynil, possèdent un point de fusion plus bas que les esters ou mélanges 16 à 21 qui comprennent notamment leurs constituants pris isolément.

Voici à présent les exemples dont il a été question ci-dessus.

EXEMPLE 1

On prépare cinq solutions solvantées a, b, c, d et e utilisables comme concentrés émulsionnables et contenant 750 g/l d'équivalent bromoxynil en dissolvant différents esters de bromoxynil dans une huile minérale essentiellement aromatique constituée par celle connue sous la marque SOLVESSO 200.

Ces solutions sont agitées jusqu'à homogénéité et apparence liquide limpide. A ces solutions on ajoute un mélange d'agents émulsionnants anioniques et non ioniques commercialisé par la Demanderesse sous la marque GALORYL EM 458 dans la proportion de 7 % (poids/poids) de GALORYL EM 458 par rapport à la solution.

Les proportions des divers esters entrant dans la constitution de chacune des solutions a à e sont indiquées dans le tableau C et exprimées en pourcentages molaires. On observe le comportement de chaque solution à différentes températures de stockage à froid, après ensemencement de ces solutions avec des quantités infimes du mélange d'esters solide propre à chacune d'entre elles.

## TABLEAU C

| | Solution n° | | | | |
| --- | --- | --- | --- | --- | --- |
| | a | b | c | d | e |
| n-octanoate de bromoxynil (pourcentage molaire) | 50 | 50 | | | |
| n-heptanoate de bromoxynil (pourcentage molaire) · | | 50 | 67 | 50 | 40 |
| n-butyrate de bromoxynil (pourcentage molaire) | 50 | | 33 | 25 | 20 |
| éthyl-2-hexanoate de bromoxynil (pourcentage molaire) | | | | 25 | |
| cekanoate de bromoxynil (pourcentage molaire) | | | | | 40 |
| densité de la solution à 20°C | 1,380 | 1,367 | 1,396 | 1,367 | 1,370 |
| Apparence à 0°C | cris-tallisé | cris-tallisé | cris-tallisé | liquide | liquide |
| Apparence à -8°C | idem | idem | idem | idem | idem |
| Apparence à -13°C | idem | idem | idem | idem | idem |
| Apparence à -18°C | idem | idem | idem | idem | idem |

Il résulte de ce tableau que les seules solutions présentant une tenue au froid acceptable industriellement sont celles suivant l'invention, à savoir les solutions d et e.

EXEMPLE 2

De la même manière que dans l'exemple 1, on prépare cinq solutions f à k contenant 750 g/l d'équivalent ioxynil réalisées par mélange de différents esters d'ioxynil dans le solvant SOLVESSO 200. A ces solutions agitées et rendues homogènes et d'apparence limpide, on rajoute comme agent tensio-actif du GALORYL EM 458 dans la même proportion que dans l'exemple 1.

Les proportions des divers esters constituant chacune des solutions sont indiquées dans le tableau D, toujours exprimées en pourcentages molaires.

On observe toujours le comportement au froid, après ensemencement réalisé avec des quantités infimes du mélange solide d'esters propre à chaque solution.

| | Solution n° | | | | |
|---|---|---|---|---|---|
| | f | g | h | i | k |
| n-octanoate d'ioxynil (pourcentage molaire) | 67 | 33 | | | |
| n-heptanoate d'ioxynil (pourcentage molaire) | | 67 | 67 | 50 | 35 |
| n-butyrate d'ioxynil (pourcentage molaire) | 33 | | 33 | 20 | 15 |
| éthyl-2-hexanoate d'ioxynil (pourcentage molaire) | | | | 30 | |
| cekanoate d'ioxynil (pourcentage molaire) | | | | | 50 |
| densité de la solution à 20°C | 1,457 | 1,465 | 1,471 | 1,447 | 1,440 |
| Apparence à 0°C | cris-tallisé | cris-* tallisé | cris-tallisé | liquide | liquide |
| Apparence à -8°C | idem | idem | idem | idem | idem |
| Apparence à -13°C | idem | idem | idem | cris-tallisé ** | cris-tallisé ** |

\*   crıstallisation spontanée avant tout ensemencement

\*\*  crıstallisation après 15 jours seulement de stockage à

cette température.

Il résulte de ce tableau que les seules solutions présentant une tenue au froid acceptable industriellement sont celles conformes à l'invention (solutions i et k).

EXEMPLE 3

De la même manière que dans les exemples 1 et 2, on prépare une solution contenant 900 g/l d'équivalent bromoxynil réalisée par mélange de n-heptanoate, de n-butyrate et d'éthyl-2-hexanoate de bromoxynil dans les pourcentages molaires respectifs 50/25/25 et dans le solvant SOLVESSO 200. On ajoute, en tant qu'agent tensio-actif, du GALORYL EM 458 dans la proportion de 7 % (poids/poids) par rapport à la solution finale. Cette formulation a une densité à 20 °C de 1,443. Sa température est amenée à 0°C, puis elle est ensemencée avec une quantité infime du mélange des esters la composant, celui-ci ayant été préalablement refroidi jusqu'à prise en masse. Dans ces conditons, il faut attendre environ un mois de stockage pour noter un début sensible de cristallisation autour des germes introduits au départ.

La même formulation placée à -8°C cristallise, après ensemencement, en environ 3 à 4 jours.

La formulation de l'exemple 3 est utilisable pour des climats tempérés dont la température ne descend pas pendant de longues périodes en dessous de 0°C.

Il est à noter qu'elle est constituée, comme mentionné dans l'expérience I, d'un mélange d'esters dont le point de fusion est d'environ 2°C. Aucune cristallisation n'est donc à craindre au-dessus de cette température.

EXEMPLE 4

De la même manière que dans les exemples 1 à 3, on prépare trois concentrés 1, m et $p_2$ émulsionnables contenant respectivement 600 g/l d'équivalent bromoxynil sous forme, pour le premier, d'un mélange n-heptanoate, n-butyrate et éthyl-2-hexanoate de bromoxynil, pour le second, d'un mélange n-heptanoate, n-butyrate et cekanoate de bromoxynil et, pour le troisième, d'un mélange n-octanoate, n-butyrate et éthyl-2-hexanoate de bromoxynil.

On prépare également deux concentrés émulsionnables n et $p_1$ contenant 600 g/l d'équivalent ioxynil sous forme, pour le premier, d'un mélange n-heptanoate, n-butyrate et éthyl-2-hexanoate d'ioxynil et, pour le second, d'un mélange n-heptanoate, n-butyrate et cekanoate d'ioxynil.

Les cinq concentrés émulsionnables comprennent, mis à part les mélanges d'esters, un solvant, à savoir du SOLVESSO 200 et des mélanges ajustés d'agents émulsionnants anioniques et non ioniques, dont du GALORYL EM 4039 qui est un mélange d'agents émulsionnants anioniques et non ioniques commercialisé par la Demanderesse.

Les proportions molaires des esters composant les susdits produits sont indiquées dans le tableau E en pour centages molaires et les proportions des émulsifs permettant une émulsion aqueuse diluée stable au moins 2 heures sont indiquées en pourcentages pondéraux par rapport au concentré émulsionnable.

## TABLEAU E

| | 1 | m | n | $p_1$ | $p_2$ |
|---|---|---|---|---|---|
| **Proportions en esters d'oxynil** | | | | | |
| n-octanoate de bromoxynil | | | | | 40 |
| n-heptanoate de bromoxynil | 50 | | 40 | | |
| n-heptanoate d'ioxynil | | 50 | | 35 | |
| n-butyrate de bromoxynil | 25 | | 20 | | 20 |
| n-butyrate d'ioxynil | | 20 | | 15 | |
| éthyl-2-hexanoate de bromoxynil | 25 | | | | 40 |
| éthyl-2-hexanoate d'ioxynil | | 30 | | | |
| cekanoate de bromoxynil | | | 40 | | |
| cekanoate d'ioxynil | | | | 50 | |
| **Proportions en agents émulsionnants dans le concentré émulsionnable** | | | | | |
| GALORYL EM 4039 | 4,60 | 7,1 | 4,15 | 7,5 | |
| Condensat de 20 moles OE sur huile de ricin | 7,40 | 5,3 | 7,85 | 5,0 | |
| Condensat de 10 moles OE sur huile de ricin | -- | 2,6 | - | 2,5 | |
| Solvant : qsp 100 % (p/p) | SOLVESSO 200 | | | | |
| Densité du concentré émulsionnable à 20°C | 1,298 | 1,374 | 1,301 | 1,364 | 1,295 |

Les cinq concentrés émulsionnables ainsi préparés sont homogènes et liquides indéfiniment lorsqu'ils sont stockés à une température de -18°C.

EXEMPLE 4bis

De la même manière que dans les exemples 1 à 4, on prépare deux concentrés $P_3$ et $P_4$ émulsionnables contenant 720 g/l d'équivalent bromoxynil sous forme, pour le premier, d'un mélange n-octanoate, n-butyrate et éthyl-2-hexanoate de bromoxynil et, pour le second, d'un mélange n-heptanoate, n-butyrate et éthyl-2-hexanoate de bromoxynil.

Les deux concentrés émulsionnables comprennent, mis à part les mélanges d'esters, un solvant, à savoir du Solvesso 200 et des mélanges ajustés d'agents émulsionnants anioniques et non ioniques, dont du Galoryl EM 4036 et du Galoryl EM 4039 qui sont des mélanges d'agents émulsionnants anioniques et non ioniques commercialisés par la Demanderesse.

Les proportions molaires des esters composant les susdits produits sont indiqués dans le tableau E' en pourcentages molaires et les proportions des émulsifs permettant une émulsion aqueuse diluée stable au moins 2 heures sont indiquées en pourcentages pondéraux par rapport au concentré émulsionnable.

## TABLEAU E'

| | $p_3$ | $p_4$ |
|---|---|---|
| **Proportions en esters d'oxynils** | | |
| n-octanoate de bromoxynil | 40 | |
| n-heptanoate de bromoxynil | | 50 |
| n-butyrate de bromoxynil | 20 | 20 |
| éthyl-2-hexanoate de bromoxynil | 40 | 30 |
| **Proportions en agents émulsionnants dans le concentré émulsionnable** | | |
| Galoryl EM 4036 | 9 | |
| Galoryl EM 4039 | | 4 |
| Condensat de 10 moles OE sur huile de ricin | 11 | 9 |
| Solvant : qsp 100 % (p/p) | SOLVESSO 200 | |
| Densité du concentré émulsionnable à 20°C | 1,361 | 1,358 |

Les deux concentrés émulsionnables ainsi préparés sont homogènes et liquides indéfiniment lorsqu'ils sont stockés à une température de -3°C pour la formule $p_3$ et de -8°C pour la formule $p_4$.

La phytoactivité des produits herbicides conformes à l'invention est illustrée par des essais comparatifs conduits tout d'abord en serre, puis en champs.

Dans ces essais, on a utilisé comme produits de comparaison les esters octanoïques d'ioxynil et/ou de bromoxynil qui sont des désherbants sélectifs, principalement dans les cultures de céréales à petites graines (blé, orge, avoine...) de printemps et d'automne, du maïs, du sorgho, de la canne à sucre et dans d'autres cultures comme l'oignon, l'ail et l'échalotte, en vue de la destruction des plantes à feuilles larges et principalement des dicotylédones.

Dans le cadre des essais en serre, on a comparé séparément pour l'ioxynil et pour le bromoxynil :
- des formulations conformes à l'invention.
- des formulations connues contenant le n-octanoate et le n-butyrate,
- des formulations contenant uniquement les esters linéaires de base, à savoir le n-heptanoate et le n-butyrate,
- des formulations contenant uniquement respectivement l'un des esters de base ramifiés qui entrent dans la composition des susdites formulations conformes à l'invention.

Ces essais montrent l'absence d'efficacité des formules à base uniquement d'ester ramifiés d'ioxynil ou de bromoxynil.

Les conclusions pouvant être tirées de ces essais sont basées sur le pourcentage de destruction de plantes sélectionnées.

Dans le cadre des essais en champ sur céréales, on a vérifié l'efficacité des formulations conformes à l'invention par rapport à des formulations, d'une part, à base d'octanoate et, d'autre part, à base de mélanges octanoate-butyrate.

On a donc mesuré le pourcentage de destruction de la flore adventice telle qu'elle se trouvait sur chaque champ. Des variations de notations assez grandes ont été obtenues du fait que les mauvaises herbes dominantes sont différentes d'un champ à l'autre et se trouvaient lors du traitement à un stade végétatif différent. On n'a tenu compte que des résultats obtenus sur des plantes présentes dans au moins deux champs pour calculer les activités des différents mélanges.

Aux fins de comparaison avec les formules conformes à l'invention, mentionnées dans l'exemple 4, tableau E, on a réalisé des concentrés émulsionnables dans l'eau à partir de divers esters de bromoxynil ou d'ioxynil ; l'identification de ces produits résulte du tableau F.

Pour l'ensemble des essais biologiques, on a adopté la notation suivante :

| notation | comportement de la plante |
|---|---|
| 10 | Très sensible, complètement détruite |
| ≥8 | Sensible |
| ≥6 | Moyennement sensible |
| ≥4 | Moyennement sensible - moyennement résistante |
| ≥2 | Moyennement résistante |
| 0 | Résistante, aucunement détruite |

EP 0 229 558 B1

TABLEAU F

| | Concentré émulsionnable n° | | | | | | | | | |
|---|---|---|---|---|---|---|---|---|---|---|
| | q | r | s | t | u | v | w | x | y | z |
| **Proportion en moles d'esters d'oxynils (%)** | | | | | | | | | | |
| n-octanoate de bromoxynil | 50 | | | | | | | | 100 | 25 |
| n-octanoate d'ioxynil | | | | | 67 | | | | | 30 |
| n-heptanoate de bromoxynil | | 50 | | | | | | | | |
| n-heptanoate d'ioxynil | | | | | | 67 | | | | |
| n-butyrate de bromoxynil | 50 | 50 | | | | | | | | 25 |
| n-butyrate d'ioxynil | | | | | 33 | 33 | | | | 20 |
| cekanoate de bromoxynil | | | 100 | | | | | | | |
| cekanote d'ioxynil | | | | | | | 100 | | | |
| éthyl-2-hexanoate de bromoxynil | | | | 100 | | | | | | |
| éthyl-2-hexanoate d'ioxynil | | | | | | | | 100 | | |
| **Teneur en matière active dans le concentré émulsionnable (en g/l)** | 480 bromo-xynil | 480 bromo-xynil | 240 bromo-xynil | 240 bromo-xynil | 480 Ioxy-nil | 480 Ioxy-nil | 240 Ioxy-nil | 240 Ioxy-nil | 240 Ioxy-nil | 480 (240 Ioxy-nil et 240 bromo-xynil) |
| **Proportions en agents émulsifiants dans le concentré émulsionnable (en %)** | | | | | | | | | | |
| Galoryl EM 514 (*) | | 3,5 | | | | | | | | |
| Galoryl EM 4039 | 4,9 | | 4,5 | 4,5 | 4,8 | 5,5 | 4,3 | 4,4 | 4,6 | 5,5 |
| Condensat de 10 moles OE sur huile de ricin | | | 1,5 | 1,5 | | 1,5 | 1,5 | 1,5 | | |
| Condensat de 20 moles OE sur huile de ricin | 3,1 | 6,5 | 3,0 | 3,0 | 3,2 | 3,0 | 2,9 | 2,9 | | 4,5 |
| Condensat de 30 moles OE sur huile de ricin | | | | | | | | | 3,4 | |
| **Solvant : qsp 100 % (p/p)** | SOLVESSO 200 | | | POUR L'ENSEMBLE | | | | | | |
| Densité du CE à 20°C | 1,247 | 1,242 | 1,114 | 1,113 | 1,272 | 1,283 | 1,150 | 1,136 | 1,140 | 1,292 |

(*) Galoryl EM 514 est la marque de fabrique d'un agent émulsifiant anionique commercialisé par la Société Demanderesse.

ESSAIS EN SERRE

On a semé des plantes dans des pots contenant de la terre de jardin et on les a cultivées normalement en vue d'une végétation équilibrée. Ces plantes ont été sélectionnées en prenant en considération les spectres d'activité respectifs de l'ioxynil et du bromoxynil.

On a appliqué les émulsions aqueuses d'herbicides par pulvérisation lorsque les plantes atteignaient le stade 2 à 4 feuilles, le volume des bouillies étant de 1000 litres par hectare et les doses de chaque matière active celles indiquées dans les tableaux G et J relatifs repectivement aux produits à base de bromoxynil et d'ioxynil, ces tableaux donnant également la composition des concentrés émulsionnables mis en oeuvre.

Les essais comparatifs portent, tant pour les produits à base de bromoxynil que pour ceux à base d'ioxynil,
- sur deux mélanges d'esters conformes à l'invention figurant au tableau E,
- sur un mélange d'esters selon l'art antérieur figurant au tableau F,
- sur un mélange d'esters linéaires constituant une partie de mélanges d'esters conformes à l'invention, figurant au tableau F et
- sur deux esters ramifiés utilisés seuls et figurant également au tableau F.

Deux pots constituent des témoins et ne sont pas traités et chaque traitement a par ailleurs été dupliqué. Les plantes de chaque pot ont été observées 30 jours après traitement et les notations illustrant l'état des adventices ont été enregistrées et comparées aux pots témoins non traités.

Les résultats sont données dans les exemples 5 (relatif aux produits à base de bromoxynil) et 6 (relatif aux produits à base d'ioxynil).

Les plantes sur lesquelles ont porté les expériences sont
- dans le cas des produits à base de bromoxynil :
Amarantus retroflexus
Brassica oleifera
Daucus carota
Matricaria inodora
Papaver rhoeas
Raphanus sativus
Solanum nigrum
Taraxacum dens leonis
Veronica agrestis
- dans le cas des produits à base d'ioxynil :
Amarantus retroflexus
Beta vulgaris
Brassica oleifera
Chenopodium album
Daucus carota
Galium aparine
Papaver rhoeas
Raphanus sativus
Stellaria media
Taraxacum dens leonis
Veronica agrestis.

EXEMPLE 5

Cet exemple est relatif aux expériences effectuées avec des produits à base d'esters de bromoxynil.

Ces herbicides ont été pulvérisés sur plantes en pots. Les teneurs en bromoxynil des produits concentrés sont données en g/l et les pourcentages volumiques nécessaires des produits concentrés par rapport à l'eau pour pouvoir traiter les semis à 1000 l/ha aux doses étudiées de 125 à 500 g de bromoxynil/ha sont données dans le tableau G suivant, dans lequel sont également identifiés, en référence aux tableaux E et F, les esters ou mélanges d'esters mis en oeuvre.

TABLEAU G

| Identifi-cation du concentré émulsionna-ble utilisé | Ester ou mélange d'esters de bromoxynil | teneur matière active (g/l) | % vol. de produit dans l'eau pour la dose de | | |
|---|---|---|---|---|---|
| | | | 125g/ha bromo-xynil | 250g/ha bromo-xynil | 500g/ha bromo-xynil |
| n, Tableau E | n-heptanoate/n-butyrate/cekanoate | 600 | 0.0208 | 0.0417 | 0.0833 |
| l, Tableau E | n-heptanoate/n-butyrate/éthyl-2-hexanoate | 600 | 0.0208 | 0.0417 | 0.0833 |
| q, Tableau F | n-octanoate/n-butyrate | 480 | 0.0260 | 0.0521 | 0.1042 |
| r, Tableau F | n-heptanoate/n-butyrate | 480 | 0.0260 | 0.0521 | 0.1042 |
| s, Tableau F | cekanoate | 240 | 0.0521 | 0.1042 | 0.2083 |
| t, Tableau F | éthyl-2-hexanoate | 240 | 0.0521 | 0.1042 | 0.2083 |

Les observations effectuees à la fin des essais ont conduit aux notations rassemblées dans le tableau H.

Les moyennes des notes d'efficacité (moyenne des deux essais) sont données par plante puis globalement (moyenne générale des notations enregistrées pour l'ensemble des plantes) et enfin limitées aux plantes intéressantes marquées d'un astérisque dans le tableau H.

EP 0 229 558 B1

TABLEAU H

| | Concentré émulsionnable à base de | | | | | | | | | | | | | | | | | |
|---|---|---|---|---|---|---|---|---|---|---|---|---|---|---|---|---|---|---|
| | n-heptanoate/ n-butyrate/ cekanoate de bromoxynil n, Tableau E | | | n-heptanoate/ n-butyrate/ éthyl-2- hexanoate de bromoxynil l, Tableau E | | | n-octanoate/ n-butyrate de bromoxynil q, Tableau F | | | n-heptanoate/ n-butyrate de bromoxynil r, Tableau F | | | cekanoate de bromoxynil s, Tableau F | | | éthyl-2- hexanoate de bromoxynil t, Tableau F | | |
| DOSE DE MATIERE ACTIVE en grammes à l'hectare | 125 | 250 | 500 | 125 | 250 | 500 | 125 | 250 | 500 | 125 | 250 | 500 | 125 | 250 | 500 | 125 | 250 | 500 |
| Plantes testées | Notations obtenues | | | | | | | | | | | | | | | | | |
| *Amarantus retroflexus | 5 | 6 | 8 | 4 | 6 | ·8 | 3 | 6 | 7 | 2 | 4 | 7 | 2 | 3 | 4 | 5 | 5 | 5 |
| Brassica oleifera | 9 | 10 | 10 | 10 | 10 | 10 | 10 | 10 | 10 | 9 | 10 | 10 | 9 | 10 | 10 | 0 | 0 | 2 |
| *Daucus carota | 2 | 3 | 10 | 6 | 10 | 10 | 5 | 7 | 10 | 4 | 7 | 9 | 1 | 2 | 3 | 0 | 0 | 0 |
| Matricaria inodora | 8 | 9 | 10 | 9 | 9 | 10 | 10 | 10 | 10 | 7 | 10 | 10 | 2 | 6 | 7 | 1 | 1 | 2 |
| Papaver rhoeas | 3 | 9 | 10 | 10 | 10 | 10 | 9 | 10 | 10 | 10 | 10 | 10 | 7 | 9 | 10 | 0 | 0 | 5 |
| *Raphanus sativus | 5 | 6 | 8 | 8 | 9 | 10 | 4 | 8 | 9 | 5 | 8 | 9 | 2 | 6 | 7 | 0 | 0 | 5 |
| Solanum nigrum | 10 | 10 | 10 | 10 | 10 | 10 | 10 | 10 | 10 | 10 | 10 | 10 | 9 | 10 | 10 | 2 | 4 | 8 |
| Taraxacum dens leonis | 5 | 7 | 10 | 9 | 10 | 10 | 9 | 10 | 10 | 4 | 6 | 8 | 5 | 7 | 7 | 0 | 0 | 0 |
| Veronica agrestis | 6 | 8 | 9 | 8 | 10 | 10 | 9 | 9 | 10 | 9 | 9 | 10 | 7 | 8 | 8 | 0 | 0 | 1 |
| moyenne générale | 5,9 | 7,6 | 9,4 | 8,2 | 9,3 | 9,8 | 7,7 | 8,9 | 9,6 | 6,7 | 8,2 | 9,2 | 4,9 | 6,8 | 7,3 | 0,9 | 1,1 | 3,1 |
| moyenne sur plantes intéressantes (notées*) | 4,0 | 5,0 | 8,7 | 6,0 | 8,3 | 9,3 | 4,0 | 7,0 | 8,7 | 3,7 | 6,3 | 8,3 | 1,7 | 3,7 | 4,7 | 1,7 | 1,7 | 3,1 |

L'examen du tableau H permet de faire les constatations suivantes.

La comparaison des moyennes (qualitatives) sur l'ensemble de toutes plantes montre que les mélanges selon l'invention (concentrés émulsionnables n et l), à la différence des esters ramifiés seuls de bromoxynil (concentrés émulsionnables s et t), ont une efficacité comparable à celle des mélanges d'esters linéaires (concentrés émulsionnables q et r) et notamment à celle du concentré q.

Les esters ramifiés seuls ne sont pas efficaces aux doses étudiées.

La comparaison des moyennes d'efficacité sur plantes résistantes au mélange classique q montre encore plus l'efficacité des mélanges selon l'invention et le peu d'intérêt des esters ramifiés seuls.

EXEMPLE 6

Cet exemple est relatif aux expériences effectuées avec des produits à base d'esters d'ioxynil.

Ces herbicides ont également été pulvérisés sur plantes en pots. Les teneurs en ioxynil des produits concentrés sont données en g/l et les pourcentages volumiques nécessaires des produits concentrés par rapport à l'eau pour pouvoir traiter les semis à 1000 l/ha aux doses étudiées de 125 à 500 g d'ioxynil/ha sont donnés dans le tableau J suivant.

<div align="center">TABLEAU J</div>

| Identification du concentré émulsionnable utilisé | Ester ou mélange d'esters d'ioxynil | teneur matière active (g/l) | % vol. de produit dans l'eau pour la dose de | | |
|---|---|---|---|---|---|
| | | | 125g/ha ioxynil | 250g/ha ioxynil | 500g/ha ioxynil |
| p₁, Tableau E | n-heptanoate/n-butyrate/ cekanoate | 600 | 0.0208 | 0.0417 | 0.0833 |
| m, Tableau E | n-heptanoate/n-butyrate/ éthyl-2-hexanoate | 600 | 0.0208 | 0.0417 | 0.0833 |
| u, Tableau F | n-octanoate/n-butyrate | 480 | 0.0260 | 0.0521 | 0.1042 |
| v, Tableau F | n-heptanoate/n-butyrate | 480 | 0.0260 | 0.0521 | 0.1042 |
| w, Tableau F | cekanoate | 240 | 0.0521 | 0.1042 | 0.2083 |
| x, Tableau F | éthyl-2-hexanoate | 240 | 0.0521 | 0.1042 | 0.2083 |

Les observations effectuées à la fin des essais ont conduit aux notations rassemblées dans le tableau K.

Les moyennes des notes d'efficacité (moyenne des deux essais) sont données par plante puis globalement (moyenne générale des notations enregistrées pour l'ensemble des plantes) et enfin limitées aux plantes intéressantes marquées d'un astérisque dans le tableau K.

16

EP 0 229 558 B1

TABLEAU K

| | Concentré émulsionnable à base de | | | | | | | | | | | | | | | | | |
| --- | --- | --- | --- | --- | --- | --- | --- | --- | --- | --- | --- | --- | --- | --- | --- | --- | --- | --- |
| | n-heptonate/ n-butyrate/ cekanoate d'ioxynil p₁, Tableau E | | | n-heptanoate/ n-butyrate/ éthyl-2- hexanoate d'ioxynil m, Tableau E | | | n-octanoate/ n-butyrate d'ioxynil u, Tableau F | | | n-heptanoate/ n-butyrate d'ioxynil v, Tableau F | | | cekanoate d'ioxynil w, Tableau F | | | éthyl-2- hexanoate d'ioxynil x, Tableau F | | |
| DOSE DE MATIERE ACTIVE en grammes à l'hectare | 125 | 250 | 500 | 125 | 250 | 500 | 125 | 250 | 500 | 125 | 250 | 500 | 125 | 250 | 500 | 125 | 250 | 500 |
| Plantes testées | Notations obtenues | | | | | | | | | | | | | | | | | |
| *Amarantus retroflexus | 6 | 9 | 10 | 5 | 10 | 10 | 4 | 10 | 10 | 5 | 9 | 10 | 1 | 9 | 10 | 0 | 2 | 4 |
| Beta vulgaris | 10 | 10 | 10 | 10 | 10 | 10 | 10 | 10 | 10 | 10 | 10 | 10 | 10 | 10 | 10 | 0 | 3 | 5 |
| Brassica oleifera | 10 | 10 | 10 | 10 | 10 | 10 | 10 | 10 | 10 | 10 | 10 | 10 | 2 | 5 | 10 | 0 | 0 | 0 |
| Chenopodium album | 3 | 4 | 8 | 4 | 9 | 10 | 9 | 10 | 10 | 7 | 10 | 10 | 0 | 7 | 10 | 5 | 5 | 8 |
| Daucus carota | 3 | 9 | 10 | 5 | 10 | 10 | 10 | 10 | 10 | 7 | 10 | 10 | 2 | 2 | 2 | 0 | 1 | 1 |
| *Galium aparine | 2 | 4 | 10 | 7 | 8 | 10 | 5 | 10 | 10 | 6 | 8 | 9 | 2 | 9 | 10 | 0 | 0 | 3 |
| Papaver rhoeas | 3 | 10 | 10 | 8 | 9 | 10 | 10 | 10 | 10 | 7 | 10 | 10 | 0 | 3 | 7 | 2 | 6 | 9 |
| *Raphanus sativus | 7 | 10 | 10 | 6 | 10 | 10 | 7 | 9 | 10 | 1 | 5 | 10 | 2 | 6 | 7 | 1 | 1 | 4 |
| Stellaria media | 9 | 10 | 10 | 6 | 10 | 10 | 8 | 10 | 10 | 6 | 10 | 10 | 1 | 2 | 8 | 0 | 0 | 1 |
| *Taraxacum dens leonis | 9 | 9 | 10 | 6 | 10 | 10 | 6 | 8 | 10 | 9 | 10 | 10 | 2 | 3 | 7 | 0 | 1 | 1 |
| Veronica agrestis | 5 | 10 | 10 | 5 | 10 | 10 | 10 | 10 | 10 | 7 | 10 | 10 | 1 | 3 | 3 | 0 | 0 | 1 |
| moyenne générale | 6,1 | 8,6 | 9,8 | 6,5 | 9,6 | 10 | 8,1 | 9,7 | 10 | 6,8 | 9,3 | 9,9 | 2,1 | 5,4 | 7,6 | 0,7 | 1,7 | 3,4 |
| moyenne sur plantes intéressantes (notées*) | 6,0 | 8,0 | 10 | 6,0 | 9,5 | 10 | 5,5 | 9,2 | 10 | 5,2 | 8,0 | 9,7 | 1,7 | 6,7 | 8,5 | 0,2 | 1,0 | 3,0 |

17

L'examen du tableau K permet de faire les constatations suivantes.

La comparaison des moyennes d'efficacité sur toutes plantes montre que les mélanges selon l'invention (concentrés émulsionnables $p_1$ et m), à la différence des esters ramifiés seuls d'ioxynil (concentrés émulsionnables w et x), ont une efficacité comparable à celle des mélanges d'esters linéaires classiques (concentrés émulsionnables u et v).

Les esters ramifiés seuls ne sont pas efficaces aux doses étudiées.

La comparaison des moyennes d'efficacité sur plantes résistantes au mélange classique u montre encore plus l'efficacité des mélanges selon l'invention et le peu d'intérêt des esters ramifiés seuls.

ESSAIS EN CHAMPS

Les essais en champs ont été conduits sur 10 champs localisés différemment pour obtenir des conditions de végétation très différentes les unes des autres de façon à pouvoir apprécier les réactions des plantes dans diverses circonstances climatiques.

Des parcelles de 15 à 22 m² ont été semées avec des céréales d'hiver. On a répété deux fois chaque essai et on a prévu des parcelles témoin, non traitées, toutes les deux parcelles. On a appliqué entre le début et le plein tallage différents produits herbicides formulés en concentrés émulsionnables, émulsionnés dans l'eau à la dose de 500 l de liquide par hectare (cette dose est intermédiaire dans l'ensemble des doses appropriées).

On a procédé à trois types d'essais comparatifs, à savoir :
- à un premier type d'essais comparatifs (exemple 7) dans lequel on met en oeuvre deux mélanges d'esters d'ioxynil conformes à l'invention, un mélange classique d'esters d'ioxynil et un ester seul d'ioxynil,
- à un deuxième type d'essais conparatifs (exemple 8) dans lequel on met en oeuvre un mélange de produits herbicides conformes à l'invention à base d'ioxynil et de produits herbicides conformes à l'invention à base de bromoxynil et un mélange de produits herbicides classiques à base d'ioxynil et de produits herbicides classiques à base de bromoxynil et
- à un troisième type d'essais (exemple 9) dans lequel, aux mélanges du deuxième type d'essais, on associe de l'isoproturon.

Dans tous ces essais, les oxynils sont estérifiés soit avec des acides prévus conformément à l'invention, soit avec des acides antérieurement utilisés, à savoir l'acide octanoïque ou un mélange des acides octanoique et butyrique.

Les mélanges d'esters de bromoxynil seuls n'ont pas été essayés sur champ car ces herbicides employés seuls ne présentent pas, sur les plantes soumises aux essais, un spectre herbicide suffisant en culture de céréales d'automne dans les conditions françaises.

Les parcelles ont été observées environ 45 jours après traitement. Dans la mesure où le contrôle de la nature des plantes adventices n'était pas assuré et où celles-ci sont présentes d'une façon aléatoire dans l'ensemble des champs, on n'a noté que le pourcentage de destruction des mauvaises herbes présentes dans au moins deux champs de céréales.

EXEMPLE 7

Cet example est relatif aux expériences effectuées avec des produits à base d'esters d'ioxynil.

Ces herbicides ont également été pulvérisés sur champs. Les teneurs en ioxynil des produits concentrés sont données en g/l et les pourcentages volumiques nécessaires des produits concentrés par rapport à l'eau pour pouvoir traiter les champs à 500 l/ha aux doses étudiées de 360 à 480 g d'ioxynil/ha sont donnés dans le tableau L suivant.

TABLEAU L

| Identifi- cation du concentré émulsionna- ble utilisé | Ester ou mélange d'esters d'ioxynil | teneur matière active (g/l) | % vol. de produit dans l'eau pour la dose de | |
|---|---|---|---|---|
| | | | 360 g/ha ioxynil | 480 g/ha ioxynil |
| p₁, Tableau E | n-heptanoate/n-butyrate/ cekanoate | 600 | 0.12 | 0.16 |
| m, Tableau E | n-heptanoate/n-butyrate/ éthyl-2-hexanoate | 600 | 0.12 | 0.16 |
| u, Tableau F | n-octanoate/n-butyrate/ | 480 | 0.15 | 0.20 |
| y, Tableau F | n-octanoate | 240 | 0.30 | 0.40 |

La liste des plantes présentes dans chacun des dix champs numérotés de 1 à 10 est donnée dans le tableau M.

## TABLEAU M

| PLANTES | CHAMPS | | | | | | | | | |
|---|---|---|---|---|---|---|---|---|---|---|
| | 1 | 2 | 3 | 4 | 5 | 6 | 7 | 8 | 9 | 10 |
| Anthemis cotula | | | | | | | | | | x |
| Aphanes arvensis | | | | | x | | x | | | |
| Arabidopsis thaliana | | | | | x | x | x | | | |
| Capsella bursa-pastoris | | | | x | | | | | | |
| Cerastium glomeratum | | | | | x | | x | | x | |
| Fumaria officinalis | | | | x | | | | | | |
| Galium aparine | | x | x | | | | | | | |
| Juneus bufonius | | | | | | | | x | | |
| Lamium amplexicaule | | | | x | | | | | | |
| Lamium purpureum | | | | | | | | | x | |
| Legousia speculum-veneris | | | | x | | | | | | |
| Matricaria inodora | x | | | | x | x | x | x | | |
| Papaver rhoeas | | | x | x | x | x | | | | |
| Picris setoria | | | | | | | | x | | |
| Polygonum aviculare | | | | x | | | | x | | x |
| Polygonum convolvulus | | | | | | | | | | x |
| Polygonum Spp | | | | | x | x | x | | | |
| Ranunculus sardous | | | | | | | | | x | |
| Raphanus raphanistrum | | | | | x | | x | | | |
| Stellaria media | x | x | x | | | | | x | x | |
| Veronica agrestis | | | | x | | | | | | |
| Veronica hederifolia | | | x | x | x | x | | | | x |
| Veronica persica | | | | x | | x | | | | |
| Viola tricolor | | | | | | | | x | | |

x = plante présente dans le champ

Les résultats d'activité à 45 jours (% de réaction des mauvaises herbes détruites) sont donnés pour chaque champ par plante dans le tableau N, puis les moyennes d'efficacité sont données pour chaque plante et globalement pour les plantes présentes dans au moins 2, 3 et 4 champs (2, 3 et 4 replications de chaque plante) dans le tableau P.

TABLEAU N

| Concentré émulsionnable | | n-heptanoate/ n-butyrate/ cekanoate d'ioxynil (p$_1$, Tableau E) | | n-heptanoate/ n-butyrate/ éthyl-2-hexanoate d'ioxynil (m, Tableau E) | | n-octanoate/ n-butyrate d'ioxynil (u, Tableau F) | | n-octanoate d'ioxynil (y, Tableau F) | |
|---|---|---|---|---|---|---|---|---|---|
| Dose d'ioxynil (g/hectare) | | 360 | 480 | 360 | 480 | 360 | 480 | 360 | 480 |
| PLANTE | Champ | Notations obtenues | | | | | | | |
| Aphanes arvensis | champ 5 | 8 | 8 | 9 | 9 | 10 | 10 | 7 | 8 |
| | champ 7 | 9 | 9 | 10 | 10 | 9 | 10 | 8 | 9 |
| | moyenne | 8,5 | 8,5 | 9,5 | 9,5 | 9,5 | 10 | 7,5 | 8,5 |
| Arabidopsis thaliana | champ 5 | 10 | 10 | 10 | 10 | 10 | 10 | 10 | 10 |
| | champ 6 | 10 | 9 | 10 | 10 | 10 | 10 | 8 | 10 |
| | champ 7 | 10 | 10 | 10 | 10 | 10 | 10 | 10 | 10 |
| | moyenne | 10 | 9,6 | 10 | 10 | 10 | 10 | 9,3 | 10 |
| Cerastium glomeratum | champ 5 | 10 | 10 | 10 | 10 | 9 | 10 | 10 | 10 |
| | champ 7 | 9 | 9 | 8 | 8 | 7 | 9 | 6 | 7 |
| | champ 9 | 3 | 3 | 3 | 3 | 3 | 4 | 3 | 3 |
| | moyenne | 7,3 | 7,3 | 7,0 | 7,0 | 6,3 | 7,6 | 6,3 | 6,6 |
| Galium aparine | champ 2 | 6 | 2 | 3 | 3 | 2 | 4 | 2 | 2 |
| | champ 3 | 3 | 4 | 7 | 5 | 8 | 8 | 2 | 4 |
| | moyenne | 4,5 | 3,0 | 5,0 | 4,0 | 5,0 | 6,0 | 2,0 | 3,0 |

EP 0 229 558 B1

TABLEAU N (suite 1)

| Concentré émulsionnable | | n-heptanoate/ n-butyrate/ cekanoate d'ioxynil ($p_1$, Tableau E) | | n-heptanoate/ n-butyrate/ éthyl-2-hexanoate d'ioxynil (m, Tableau E) | | n-octanoate/ n-butyrate d'ioxynil (u, Tableau F) | | n-octanoate d'ioxynil (y, Tableau F) | |
|---|---|---|---|---|---|---|---|---|---|
| Dose d'ioxynil (g/hectare) | | 360 | 480 | 360 | 480 | 360 | 480 | 360 | 480 |
| PLANTE | Champ | Notations obtenues | | | | | | | |
| Matricaria inodora | champ 1 | 3 | 3 | 4 | 2 | 2 | 3 | 2 | 2 |
| | champ 5 | 10 | 10 | 10 | 10 | 10 | 10 | 10 | 10 |
| | champ 6 | 10 | 6 | 8 | 6 | 10 | 10 | 10 | 10 |
| | champ 7 | 8 | 9 | 10 | 10 | 9 | 10 | 8 | 9 |
| | champ 8 | 3 | 4 | 4 | 5 | 7 | 9 | 5 | 6 |
| | moyenne | 6,8 | 6,4 | 7,2 | 6,6 | 7,6 | 8,4 | 7 | 7,4 |
| Papaver rhoeas | champ 3 | 10 | 10 | 10 | 10 | 8 | 10 | 2 | 7 |
| | champ 4 | 5 | 6 | 3 | 5 | 5 | 6 | 2 | 4 |
| | champ 5 | 9 | 9 | 9 | 9 | 10 | 10 | 8 | 10 |
| | champ 6 | 10 | 6 | 10 | 8 | 8 | 8 | 6 | 5 |
| | moyenne | 8,5 | 7,7 | 8,0 | 8,0 | 7,7 | 8,5 | 4,5 | 6,5 |
| Polygonum aviculare | champ 4 | 5 | 3 | 2 | 4 | 4 | 5 | 6 | 2 |
| | champ 8 | 5 | 4 | 5 | 6 | 8 | 8 | 6 | 7 |
| | champ 10 | 3 | 4 | 3 | 4 | 3 | 5 | 3 | 3 |
| | moyenne | 4,3 | 3,6 | 3,3 | 4,6 | 5 | 6 | 5 | 4 |
| Polygonum spp | champ 5 | 10 | 9 | 8 | 8 | 8 | 9 | 6 | 6 |
| | champ 6 | 7 | 3 | 6 | 5 | 5 | 8 | 7 | 6 |
| | champ 7 | 8 | 8 | 9 | 9 | 9 | 10 | 10 | 10 |
| | moyenne | 8,3 | 6,6 | 7,6 | 7,3 | 7,3 | 9 | 7,6 | 7,3 |

TABLEAU N (suite 2)

| Concentré émulsionnable | | n-heptanoate/ n-butyrate/ cekanoate d'ioxynil (p$_1$, Tableau E) | | n-heptanoate/ n-butyrate/ éthyl-2-hexanoate d'ioxynil (m, Tableau E) | | n-octanoate/ n-butyrate d'ioxynil (u, Tableau F) | | n-octanoate d'ioxynil (y, Tableau F) | |
|---|---|---|---|---|---|---|---|---|---|
| Dose d'ioxynil (g/hectare) | | 360 | 480 | 360 | 480 | 360 | 480 | 360 | 480 |
| PLANTE | Champ | Notations obtenues | | | | | | | |
| Raphanus raphanistrum | champ 5 | 9 | 9 | 8 | 9 | 10 | 9 | 9 | 9 |
| | champ 7 | 10 | 10 | 10 | 10 | 10 | 10 | 10 | 10 |
| | moyenne | 9,5 | 9,5 | 9,0 | 9,5 | 10 | 9,5 | 9,5 | 9,5 |
| Stellaria media | champ 1 | 2 | 2 | 4 | 2 | 2 | 2 | 4 | 2 |
| | champ 2 | 3 | 2 | 3 | 3 | 2 | 2 | 2 | 2 |
| | champ 3 | 2 | 5 | 8 | 10 | 5 | 5 | 2 | 4 |
| | champ 7 | 7 | 8 | 8 | 7 | 6 | 9 | 6 | 5 |
| | champ 9 | 3 | 3 | 3 | 3 | 3 | 3 | 3 | 3 |
| | moyenne | 3,4 | 4,0 | 5,2 | 5,0 | 3,6 | 4,2 | 3,4 | 3,2 |
| Veronica hederifolia | champ 3 | 2 | 2 | 5 | 3 | 7 | 8 | 2 | 5 |
| | champ 4 | 2 | 3 | 2 | 2 | 4 | 6 | 8 | 2 |
| | champ 5 | 10 | 10 | 10 | 10 | 10 | 10 | 8 | 10 |
| | champ 6 | 5 | 2 | 7 | 4 | 5 | 5 | 2 | 3 |
| | champ 10 | 4 | 6 | 4 | 7 | 5 | 7 | 4 | 5 |
| | moyenne | 4,6 | 4,6 | 5,6 | 5,2 | 6,2 | 7,2 | 4,8 | 5,0 |
| Veronica persica | champ 4 | 6 | 6 | 4 | 6 | 8 | 7 | 8 | 6 |
| | champ 6 | 10 | 8 | 8 | 10 | 10 | 10 | 10 | 10 |
| | moyenne | 8,0 | 7,0 | 6,0 | 8,0 | 9,0 | 8,5 | 9,0 | 8,0 |

EP 0 229 558 B1

EP 0 229 558 B1

TABLEAU P

| | | Concentré émulsionnable à base de | | | | | | | |
|---|---|---|---|---|---|---|---|---|---|
| | | n-heptanoate/ n-butyrate/ cekanoate d'ioxynil (p₁, Tableau E) | | n-heptanoate/ n-butyrate/ éthyl-2-hexanoate d'ioxynil (m, Tableau E) | | n-octanoate/ n-butyrate d'ioxynil (u, Tableau F) | | n-octanoate d'ioxynil (y, Tableau F) | |
| Dose de matière active (g/ha) | | 360 | 480 | 360 | 480 | 360 | 480 | 360 | 480 |
| PLANTE | Nb de Champs concernés par la plante | Moyenne des notations | | | | | | | |
| Aphanes arvensis | 2 | 8,5 | 8,5 | 9,5 | 9,5 | 9,5 | 10 | 7,5 | 8,5 |
| Arabidopsis thaliana | 3 | 10 | 9,6 | 10 | 10 | 10 | 10 | 9,3 | 10 |
| Cerastium glomeratum | 3 | 7,3 | 7,3 | 7,0 | 7,0 | 6,3 | 7,6 | 6,3 | 6,6 |
| Galium aparine | 2 | 4,5 | 3,0 | 5,0 | 4,0 | 5,0 | 6,0 | 2,0 | 3,0 |
| Matricaria inodora | 5 | 6,8 | 6,4 | 7,2 | 6,6 | 7,6 | 8,4 | 7,0 | 7,4 |
| Papaver rhoeas | 4 | 8,5 | 7,7 | 8,0 | 8,0 | 7,7 | 8,5 | 4,5 | 6,5 |
| Polygonum aviculare | 3 | 4,3 | 3,6 | 3,3 | 4,6 | 5,0 | 6,0 | 5,0 | 4,0 |
| Polygonum spp | 3 | 8,3 | 6,6 | 7,6 | 7,3 | 7,3 | 9,0 | 7,6 | 7,3 |
| Raphanus raphanistrum | 2 | 9,5 | 9,5 | 9,0 | 9,5 | 10 | 9,5 | 9,5 | 9,5 |

## TABLEAU P (suite)

| | | Concentré émulsionnable à base de | | | | | | | |
|---|---|---|---|---|---|---|---|---|---|
| | | n-heptanoate/ n-butyrate/ cekanoate d'ioxynil (p$_1$, Tableau E) | | n-heptanoate/ n-butyrate/ éthyl-2-hexanoate d'ioxynil (m, Tableau E) | | n-octanoate/ n-butyrate d'ioxynil (u, Tableau F) | | n-octanoate d'ioxynil (y, Tableau F) | |
| Dose de matière active (g/ha) | | 360 | 480 | 360 | 480 | 360 | 480 | 360 | 480 |
| PLANTE | Nb de Champs concernés par la plante | Moyenne des notations | | | | | | | |
| Stellaria media | 5 | 3,4 | 4,0 | 5,2 | 5,0 | 3,6 | 4,2 | 3,6 | 3,2 |
| Veronica hederifolia | 5 | 4,6 | 4,6 | 5,6 | 5,2 | 6,2 | 7,2 | 4,8 | 5,0 |
| Veronica persica | 2 | 8,0 | 7,0 | 6,0 | 8,0 | 9,0 | 8,5 | 9,0 | 8,0 |
| moyenne d'activité | | | | | | | | | |
| (plantes présentes dans 2 champs et plus) | | 7,0 | 6,5 | 7,0 | 7,1 | 7,2 | 7,9 | 6,3 | 6,6 |
| (plantes présentes dans 3 champs et plus) | | 6,7 | 6,2 | 6,7 | 6,7 | 6,7 | 7,6 | 6,0 | 6,2 |
| (plantes présentes dans 4 champs et plus) | | 5,8 | 5,7 | 6,5 | 6,2 | 6,3 | 7,1 | 5,0 | 5,5 |

À l'examen des tableaux N et P, on peut faire les constatations suivantes.

Les mélanges P₁ et m selon l'invention se comportent, du point de vue efficacité herbicide sur mauvaises herbes de céréales d'hiver, en champs, d'une manière intermédiaire entre les deux herbicides connus u et y. Ils peuvent donc être considérés comme effectivement herbicides aux doses utilisées dans l'art antérieur.

Il est à noter que les céréales d'hiver n'ont été affectées par aucun des herbicides à aucune des doses essayées.

EXEMPLE 8

Mélanges d'esters d'ioxynil et d'esters de bromoxynil

Les herbicides à base d'ioxynil et de bromoxynil sous forme d'esters (voir tableau R) ont été pulvérisés sur champs. Les teneurs des produits concentrés en ioxynil et bromoxynil sont données en g/l et les pourcentages volumiques nécessaires des produits concentrés par rapport à l'eau pour pouvoir traiter les champs à 500 l/ha aux doses étudiées de 180 g d'ioxynil plus 180 g de bromoxynil et 240 g d'ioxynil plus 240 g de bromoxynil/ha sont donnés dans ledit tableau R.

## TABLEAU R

| Identifi-cation des concentrés émulsionna-bles utilisés | Matières actives | teneur matière active (g/l) | % vol. de produit dans l'eau pour la dose de | |
|---|---|---|---|---|
| | | | 180 g/ha bromoxynil +180 g/ha ioxynil | 240 g/ha bromoxynil +240 g/ha ioxynil |
| z, Tableau F | n-octanoate/n-butyrate d'ioxynil n-octanoate/n-butyrate de bromoxynil | 480 | 0.15 | 0.20 |
| p₁, Tableau E | n-heptanoate/n-butyrate/ cekanoate d'ioxynil | 600 | 0.06 | 0.08 |
| n, Tableau E | n-heptanoate/n-butyrate/ cekanoate de bromoxynil | 600 | 0.06 | 0.08 |

La liste des plantes présentes dans chacun des dix champs traités est donnée dans le tableau S.

## TABLEAU S

| PLANTES | CHAMPS | | | | | | | | | |
|---|---|---|---|---|---|---|---|---|---|---|
| | 1 | 2 | 3 | 4 | 5 | 6 | 7 | 8 | 9 | 10 |
| Anthemis cotula | | | | x | | | | | | |
| Aphanes arvensis | | | | | x | | x | | | |
| Arabidopsis thaliana | | | | | | x | x | | | |
| Capsella bursa-pastoris | | | | x | | | | | | |
| Cardamine hirsuta | | | | | | | | | x | |
| Cerastium glomeratum | | | | | x | | x | x | x | |
| Fumaria officinalis | | | | x | | | | | | |
| Galium aparine | | | x | | | | | | | |
| Juneus bufonius | | | | | | | | x | | |
| Lamium purpureum | | | | | | | | | x | |
| Legousia speculum-veneris | | | | x | | | | | | |
| Matricaria chamomilla | | | | | | | | x | | |
| Matricaria inodora | x | | | | x | x | x | | | |
| Picris setoria | | | | | | | | x | | |
| Polygonum aviculare | | | | x | | | | x | | x |
| Polygonum convolvulus | | | | | | | | | | x |
| Polygonum Spp | | | | | x | x | x | | | |
| Ranunculus sardous | | | | | | | | | x | |
| Stellaria media | x | x | x | | | | | x | x | |
| Veronica agrestis | | | | x | | | | | | |
| Veronica hederifolia | | | x | | | x | | | | x |
| Veronica persica | | | | x | x | x | | | | |
| Viola tricolor | | | x | | | | | x | | |

x = plante présente dans le champ

Les résultats d'efficacité à 45 jours (% de réaction des mauvaises herbes) sont donnés pour chaque champ et par plante dans le tableau T, puis les moyennes d'activité sont données pour chaque plante et globalement pour les plantes présentes dans au moins 2, 3 et 4 champs (2, 3 et 4 replications de chaque plante) dans le tableau U.

### TABLEAU I

| Concentré émulsionnable | | n-octanoate/ n-butyrate . d'ioxynil . de bromoxynil z, Tableau F | | n-heptanoate/ n-butyrate/ cekanoate . d'ioxynil . de bromoxynil $p_1$ et n, Tableau E | |
|---|---|---|---|---|---|
| Dose oxynils (g/ha) | | 180 + 180 | 240 + 240 | 180 + 180 | 240 + 240 |
| PLANTE | champ | Notations | | | |
| Aphanes arvensis | champ 5 | 9 | 10 | 10 | 9 |
| | champ 7 | 10 | 10 | 10 | 10 |
| | moyenne | 9,5 | 10 | 10 | 9,5 |
| Arabidopsis thaliana | champ 6 | 8 | 10 | 10 | 10 |
| | champ 7 | 9 | 8 | 10 | 10 |
| | moyenne | 8,5 | 9,0 | 10 | 10 |
| Cerastium glomeratum | champ 5 | 10 | 10 | 10 | 10 |
| | champ 7 | 4 | 5 | 8 | 7 |
| | champ 8 | 5 | 5 | 5 | 5 |
| | champ 9 | 3 | 3 | 3 | 3 |
| | moyenne | 5,5 | 5,7 | 6,5 | 6,2 |
| Matricaria inodora | champ 1 | 4 | 5 | 2 | 6 |
| | champ 5 | 10 | 10 | 10 | 10 |
| | champ 6 | 10 | 10 | 10 | 10 |
| | champ 7 | 10 | 9 | 10 | 10 |
| | moyenne | 8,5 | 8,5 | 8,0 | 9,0 |
| Polygonum aviculare | champ 4 | 6 | 8 | 7 | 8 |
| | champ 8 | 8 | 8 | 7 | 10 |
| | champ 10 | 5 | 6 | 6 | 7 |
| | moyenne | 6,3 | 7,3 | 6,6 | 8,3 |
| Polygonum Spp | champ 5 | 10 | 10 | 10 | 10 |
| | champ 6 | 4 | 4 | 5 | 7 |
| | champ 7 | 9 | 10 | 10 | 10 |
| | moyenne | 7,6 | 8,0 | 8,3 | 9,0 |

### TABLEAU T (suite 1)

| Concentré émulsionnable | | n-octanoate/ n-butyrate . d'ioxynil . de bromoxynil  z, Tableau F | | n-heptanoate/ n-butyrate/ cekanoate . d'ioxynil . de bromoxynil $p_1$ et n, Tableau E | |
|---|---|---|---|---|---|
| Dose oxynils (g/ha) | | 180 + 180 | 240 + 240 | 180 + 180 | 240 + 240 |
| PLANTE | champ | Notations | | | |
| Stellaria media | champ 1 | 2 | 2 | 2 | 2 |
| | champ 2 | 2 | 2 | 2 | 2 |
| | champ 3 | 8 | 5 | 7 | 6 |
| | champ 7 | 5 | 4 | 7 | 8 |
| | champ 9 | 3 | 4 | 4 | 4 |
| | moyenne | 4,0 | 3,4 | 4,4 | 4,4 |
| Veronica hederifolia | champ 3 | 4 | 5 | 3 | 4 |
| | champ 6 | 4 | 3 | 3 | 4 |
| | champ 10 | 3 | 4 | 4 | 7 |
| | moyenne | 3,6 | 4,0 | 3,3 | 5,0 |
| Veronica persica | champ 4 | 6 | 10 | 7 | 8 |
| | champ 5 | 10 | 10 | 10 | 10 |
| | champ 6 | 9 | 9 | 10 | 7 |
| | moyenne | 8,3 | 9,6 | 9,0 | 8,3 |
| Viola tricolor | champ 3 | 10 | 5 | 10 | 10 |
| | champ 8 | 3 | 4 | 5 | 6 |
| | moyenne | 6,5 | 4,5 | 7,5 | 8,0 |

TABLEAU U

| Concentré émulsionnable | | n-octanoate/ n-butyrate . d'ioxynil . de bromoxynil z, Tableau F | | n-heptanoate/ n-butyrate cekanoate . d'ioxynil . de bromoxynil $p_1$ et n, Tableau E | |
|---|---|---|---|---|---|
| Dose matière active (g/hectare) | | 180 + 180 | 240 + 240 | 180 + 180 | 240 + 240 |
| PLANTE | Nb champs concernés par la plante | Moyenne des notations | | | |
| Aphanes arvensis | 2 | 9,5 | 10 | 10 | 9,5 |
| Arabidopsis thaliana | 2 | 8,5 | 9,0 | 10 | 10 |
| Cerastium glomeratum | 4 | 5,5 | 5,7 | 6,5 | 6,2 |
| Matricaria inodora | 4 | 8,5 | 8,5 | 8,0 | 9,0 |
| Polygonum aviculare | 3 | 6,3 | 7,3 | 6,6 | 8,3 |
| Polygonum Spp | 3 | 7,6 | 8,0 | 8,3 | 9,0 |
| Stellaria media | 5 | 4,0 | 3,4 | 4,4 | 4,4 |
| Veronica hederifolia | 3 | 3,6 | 4,0 | 3,3 | 5,0 |
| Veronica persica | 3 | 8,3 | 9,6 | 9,0 | 8,3 |
| Viola tricolor | 2 | 6,5 | 4,5 | 7,5 | 8,0 |
| moyenne d'activité (plantes présentes dans 2 champs et plus) | | 6,8 | 7,0 | 7,4 | 7,8 |
| (plantes présentes dans 3 champs et plus) | | 6,3 | 6,6 | 6,8 | 7,2 |
| (plantes présentes dans 4 champs et plus) | | 6,0 | 5,9 | 6,3 | 6,5 |

Le mélange conforme à l'invention ($p_1$ et n, tableau E) se comporte, du point de vue efficacité herbicide sur mauvaises herbes de céréales d'hiver, en champs, d'une manière comparable au mélange connu (z, tableau F), les différences notées étant même à l'avantage du premier.

Le mélange conforme à l'invention peut être considéré comme effectivement herbicide aux doses utilisées dans l'art antérieur.

Il est à noter que les céréales d'hiver n'ont été affectées par aucun des herbicides à aucune des doses essayées.

<u>EXEMPLE 9</u>

<u>Mélanges d'esters d'ioxynil et d'esters de bromoxynil en association avec de l'isoproturon</u>

Des herbicides à base d'ioxynil et de bromoxynil sous forme d'esters en mélange avec une suspension aqueuse d'isoproturon (voir tableau V) ont été pulvérisés sur champs. Les teneurs des produits concentrés en ioxynil et bromoxynil sont données en g/l et les pourcentages volumiques nécessaires des produits concentrés par rapport à l'eau pour pouvoir traiter les champs à 500 l/ha aux doses étudiées de 180 g d'ioxynil plus 180 g de bromoxynil et 240 g d'ioxynil plus 240 g de bromoxynil/ha sont donnés dans ledit tableau V. L'isoproturon utilisé était sous forme de suspension aqueuse commercialisée par Ciba Geigy sous le nom de Ofal 440 autosuspensible. Elle titre 440 g/l. La dose introduite est restée constante à 1320 g/ha. Cette suspension concentrée est également reprise dans le tableau V.

| Identifi-cation des concentrés utilisés | Matières actives | teneur matière active (g/l) | % vol. de produit dans l'eau pour la dose de | |
|---|---|---|---|---|
| | | | 180 g/ha bromoxynil +180 g/ha ioxynil +1320 g/ha isoproturon | 240 g/ha bromoxynil +240 g/ha ioxynil +1320 g/ha isoproturon |
| z, Tableau F | n-octanoate/n-butyrate d'ioxynil n-octanoate/n-butyrate de bromoxynil | 480 | 0.15 | 0.20 |
| + isoproturon | Ofal 440 autosuspensible | 440 | 0.6 | 0.6 |
| $p_1$ et n, Tableau E | n-heptanoate/n-butyrate/cekanoate d'ioxynil | 600 | 0.06 | 0.08 |
| | n-heptanoate/n-butyrate/cekanoate de bromoxynil | 600 | 0.06 | 0.08 |
| + isoproturon | Ofal 440 autosuspensible | 440 | 0.6 | 0.6 |

La liste des plantes présentes dans chaque champ est donnée dans le tableau W.

TABLEAU W

| PLANTES | CHAMPS | | | | | | | |
|---|---|---|---|---|---|---|---|---|
| | 1 | 2 | 3 | 4 | 5 | 6 | 7 | 8 |
| Aphanes arvensis | | x | x | | x | | | |
| Galium aparine | x | x | | | | | | |
| Lamium amplexicaule | | x | | | | | | |
| Lamium purpureum | | x | | | | | x | |
| Polygonum Spp | | | | x | x | | | x |
| Raphanus raphanistrum | | | x | | x | | | |
| Stellaria media | | x | x | x | x | | x | |
| Veronica hederifolia | x | x | x | x | | | | x |
| Veronica persica | x | x | x | x | | | x | |
| Viola tricolor | x | | | x | | x | | |

x = plante présente dans le champ

Les résultats d'efficacité à 45 jours (% de réaction des mauvaises herbes) sont donnés pour chaque champ et par plante dans le tableau Y, puis les moyennes d'activité sont données pour chaque plante et globalement pour les plantes présentes dans au moins 2, 3 et 4 champs (2, 3 et 4 replications de chaque plante) dans le tableau Z.

## TABLEAU Y

| Concentrés | | n-octanoate/ n-butyrate . d'ioxynil . de bromoxynil (+ isoproturon) z, Tableau F + isoproturon | | n-heptanoate/ n-butyrate/ cekanoate . d'ioxynil . de bromoxynil (+ isoproturon) $p_1$ et n, Tableau E + isoproturon | |
|---|---|---|---|---|---|
| Dose matière active (g/hectare) | | 180 + 180 (+1320) | 240 + 240 (+1320) | 180 + 180 (+1320) | 240 + 240 (+1320) |
| PLANTE | champ | Notations | | | |
| Aphanes arvensis | champ 2 | 4 | 8 | 5 | 6 |
| | champ 3 | 10 | 10 | 10 | 10 |
| | champ 5 | 10 | 10 | 10 | 10 |
| | moyenne | 8,0 | 9,3 | 8,3 | 8,6 |
| Galium aparine | champ 1 | 8 | 8 | 8 | 8 |
| | champ 2 | 4 | 4 | 2 | 3 |
| | moyenne | 6,0 | 6,0 | 5,0 | 5,5 |
| Lamium purpureum | champ 2 | 4 | 5 | 3 | 5 |
| | champ 7 | 5 | 6 | 8 | 8 |
| | moyenne | 4,5 | 5,5 | 5,5 | 6,5 |
| Polygonum Spp | champ 4 | 9 | 8 | 7 | 9 |
| | champ 5 | 10 | 10 | 10 | 10 |
| | champ 8 | 9 | 8 | 9 | 9 |
| | moyenne | 9,3 | 8,6 | 8,6 | 9,3 |
| Raphanus raphanistrum | champ 3 | 10 | 10 | 10 | 10 |
| | champ 5 | 10 | 10 | 10 | 10 |
| | moyenne | 10 | 10 | 10 | 10 |
| Stellaria media | champ 2 | 2 | 3 | 3 | 6 |
| | champ 3 | 10 | 10 | 10 | 10 |
| | champ 4 | 10 | 10 | 10 | 10 |
| | champ 5 | 10 | 10 | 10 | 10 |
| | champ 7 | 7 | 7 | 9 | 9 |
| | moyenne | 7,8 | 8,0 | 8,4 | 9,0 |

TABLEAU Y (suite)

| Concentrés | | n-octanoate/<br>n-butyrate<br>. d'ioxynil<br>. de bromoxynil<br>(+ isoproturon)<br><br>z, Tableau F<br>+ isoproturon | | n-heptanoate/<br>n-butyrate/<br>cekanoate<br>. d'ioxynil<br>. de bromoxynil<br>(+ isoproturon)<br>$P_1$ et n, Tableau E<br>+ isoproturon | |
|---|---|---|---|---|---|
| Dose matière active<br>(g/hectare) | | 180 + 180<br>(+1320) | 240 + 240<br>(+1320) | 180 + 180<br>(+1320) | 240 + 240<br>(+1320) |
| PLANTE | champ | Notations | | | |
| Veronica<br>hederifolia | champ 1 | 7 | 5 | 7 | 6 |
| | champ 2 | 4 | 8 | 3 | 5 |
| | champ 3 | 10 | 10 | 10 | 10 |
| | champ 4 | 4 | 4 | 6 | 5 |
| | champ 8 | 3 | 3 | 3 | 4 |
| | moyenne | 5,6 | 6,0 | 5,8 | 6,0 |
| Veronica<br>persica | champ 1 | 5 | 8 | 8 | 7 |
| | champ 2 | 7 | 7 | 8 | 10 |
| | champ 3 | 10 | 10 | 10 | 10 |
| | champ 4 | 10 | 9 | 10 | 10 |
| | champ 7 | 9 | 9 | 8 | 8 |
| | moyenne | 8,2 | 8,6 | 8,8 | 9,0 |
| Viola<br>tricolor | champ 1 | 7 | 10 | 10 | 10 |
| | champ 4 | 10 | 8 | 10 | 10 |
| | champ 6 | 6 | 7 | 8 | 9 |
| | moyenne | 7,6 | 8,3 | 9,3 | 9,6 |

## TABLEAU Z

| Concentrés | | n-octanoate/ n-butyrate . d'ioxynil . de bromoxynil (+ isoproturon) z, Tableau F + isoproturon | | n-heptanoate/ n-butyrate/ cekanoate . d'ioxynil . de bromoxynil (+ isoproturon) $p_1$ et n, Tableau E + isoproturon | |
|---|---|---|---|---|---|
| Dose matière active (g/hectare) | | 180 + 180 (+1320) | 240 + 240 (+1320) | 180 + 180 (+1320) | 240 + 240 (+1320) |
| PLANTE | Nb champs concernés par la plante | Moyenne des notations | | | |
| Aphanes arvensis | 3 | 8,0 | 9,3 | 8,3 | 8,6 |
| Galium aparine | 2 | 6,0 | 6,0 | 5,0 | 5,5 |
| Lamium purpureum | 2 | 4,5 | 5,5 | 5,5 | 6,5 |
| Polygonum Spp | 3 | 9,3 | 8,6 | 8,6 | 9,3 |
| Raphanus raphanistrum | 2 | 10 | 10 | 10 | 10 |
| Stellaria media | 5 | 7,8 | 8,0 | 8,4 | 9,0 |
| Veronica hederifolia | 5 | 5,6 | 6,0 | 5,8 | 6,0 |
| Veronica persica | 5 | 8,2 | 8,6 | 8,8 | 9,0 |
| Viola tricolor | 3 | 7,6 | 8,3 | 9,3 | 9,6 |
| moyenne d'activité (plantes présentes dans 2 champs et plus) | | 7,4 | 7,8 | 7,7 | 8,2 |
| (plantes présentes dans 3 champs et plus) | | 7,8 | 8,1 | 8,2 | 8,6 |
| (plantes présentes dans 4 champs et plus) | | 7,2 | 7,5 | 7,7 | 8,0 |

Le mélange conforme à l'invention, associé à l'isoproturon, se comporte, du point de vue efficacité herbicide sur mauvaises herbes de céréales d'hiver, en champs, d'une manière comparable au mélange connu (2, tableau P + isoproturon), les différences notées étant même à l'avantage du mélange conforme à l'invention, qui peut être considéré comme effectivement herbicide aux doses utilisées dans l'art antérieur.

EXEMPLE 10

Des essais, en champ, sur maïs ont été conduits sur 12 sites différents de façon à obtenir des conditions de végétation très différentes les unes des autres pour pouvoir apprécier les réactions des plantes dans diverses conditions climatiques et sur des variétés différentes.

Dans le même site, les applications ont été réalisées à deux stades végétatifs du maïs, l'un précoce au stade 2/4 feuilles, l'autre tardif au stade 4/8 feuilles, stade végétatif correspondant à la plage usuelle d'utilisation de ce type de produit.

Les traitements sur parcelles de 15 à 22 m² ont été effectués courant juin. Chaque traitement a été répété deux fois.

Des parcelles témoin non traitées ont été incluses dans le dispositif expérimental toutes les deux parcelles traitées. On a appliqué dans chaque champ différentes compositions herbicides, formulées en concentré émulsionnable, émulsionnées dans l'eau à la dose de 500 l de bouillie par hectare (dose intermédiaire dans l'ensemble des doses appropriées).

A titre de comparaison, on a également appliqué dans les mêmes conditions un produit commercial en référence, vendu pour cette application. Il s'agit d'une suspension aqueuse concentrée contenant 250 g de bromoxynil sous forme phénol.

On a mis en oeuvre un mélange émulsionnable d'esters conforme à l'invention contenant de l'octanoate, du butyrate et de l'éthyl-2-hexanoate de bromoxynil (mélange $p_2$ du tableau E), un concentré émulsionnable contenant uniquement de l'octanoate de bromoxynil à raison de 240 g/l et pour comparaison une suspension aqueuse de bromoxynil non estérifié.

Le produit à base de bromoxynil phénol, désigné ci-après par "Produit $\alpha$", a la composition suivante :
Bromoxynil : 250 g/l

## Agents inertes en % :

| | |
|---|---|
| Propylèneglycol | 9 % |
| Galoryl MT 41* | 0,5 % |
| Soprophor FL** | 2 % |
| Hétéropolysaccharide | 0,3 % |
| Conservateur | 0,1 % |
| Eau q.s.p. | 100 % |
| (densité à 20°C = 1160) | |

* Le GALORYL MT 41 est un agent mouillant du type non ionique commercialisé par la Demanderesse.

** Le SOPROPHOR FL est un agent mouillant dispersant de type anionique commercialisé par RHONE-POULENC.

Le concentré émulsionnable, appelé ci-après "Produit $\beta$", contenant l'octanoate de bromoxynil, renferme :
- le bromoxynil sous forme n-octanoate : 240 g/l
- les agents inertes (en %) suivants :
Galoryl EM 4039 5,25 %
Condensat 20 moles oxyde éthylène sur huile de ricin 4,75 %
Solvesso 200 q.s.p. 100 %
(densité à 20°C = 1119)

On a simultanément, dans cet essai, mesuré l'efficacité des produits herbicides dans les exemples précédents (voir notamment définition des notations donnée plus haut) et leur phytotoxicité sur le maïs sui-

vant l'échelle suivante :

| notation n | phytotoxicité | commentaire |
|---|---|---|
| 0 < n < 1 | nulle | bon |
| 1 ≤ n < 2 | très faible | bon |
| 2 ≤ n < 3 | faible | acceptable |
| 3 ≤ n < 4 | modérée | inacceptable |
| 4 ≤ n < 5 | assez forte | " |
| 5 ≤ n < 6 | forte | " |
| 6 ≤ n < 7 | très forte | " |
| 7 à 10 | très forte | " |

Les pourcentages volumiques nécessaires des produits concentrés par rapport à l'eau pour pouvoir traiter les champs à 500 l/ha aux doses étudiées, sont donnés dans le tableau AA suivant :

## TABLEAU AA

| Identification du concentré | Composé à base de bromoxynil | teneur matière active (g/l) | % en vol. de produit formulé dans l'eau pour la dose de : | | |
|---|---|---|---|---|---|
| | | | 360g/ha bromoxynil | 480g/ha bromoxynil | 600g/ha bromoxynil |
| Produit α | Bromoxynil non estérifié | 250 | | | 0,48 |
| Produit β | n-octanoate de bromoxynil | 240 | 0,30 | 0,40 | |
| P$_2$, tableau E | n-octanoate/ n-butyrate/ éthyl-2-hexa- noate de bromoxynil | 600 | 0,12 | 0,16 | |

Les résultats d'efficacité à 25 jours (pourcentage de réaction des mauvaises herbes détruites) sont donnés en moyenne par plante puis globablement pour l'ensemble des plantes présentes, dans le tableau BB suivant.

Les résultats de sélectivité vis-à-vis du maïs à 25 jours appréciés suivant l'échelle de notation ci-dessus sont donnés globalement également dans le tableau BB.

37

**TABLEAU BB**

| Concentré à base de | | Bromoxynil | n-octanoate de bromoxynil | | n-octanoate n-butyrate éthyl-2-hexanoate de bromoxynil | |
|---|---|---|---|---|---|---|
| Dose de bromoxynil (g/ha) . | | 600 | 360 | 480 | 360 | 480 |
| PLANTES | Nb de sites concernés par la plante | Moyenne des notations | | | | |
| Amaranthus retroflexus | 4 | 7,7 | 8,5 | 9,6 | 7,4 | 7,7 |
| Chenopodium album | 12 | 9,9 | 9,7 | 9,9 | 9,5 | 9,7 |
| Senecio vulgaris | 4 | 10 | 9,6 | 10 | 9,2 | 10 |
| Solanum nigrum | 12 | 8,4 | 8,7 | 8,8 | 8 | 9,2 |
| Moyenne d'activité sur l'ensemble des sites | | 9 | 9,1 | 9,6 | 8,5 | 9,2 |
| Phytotoxicité (moyenne/10) | | 0,4 | 1 | 1,6 | 0,2 | 1 |
| % de sites à phytotoxicité marginale (pourcentage des sites dont la note de phytotoxicité est $\geqslant$ 3) | | 8 | 17 | 29 | 0 | 8 |

Le mélange conforme à l'invention se comporte, du point de vue efficacité herbicide sur mauvaises herbes de maïs, en champ, d'une manière comparable au bromoxynil non estérifié et très légèrement moins bien que l'octanoate de bromoxynil. Ce dernier produit, cependant, ne présente pas une garantie suffisante quant à l'inocuité sur le maïs, comparativement à la formulation à base de bromoxynil, prise en référence.

A cet égard, le mélange selon l'invention possède la même qualité que le produit de référence.

L'avantage du mélange selon l'invention par rapport au mélange de référence est sa dose d'utilisation qui peut raisonnablement se situer à 360 g de bromoxynil par hectare contre 600 g par hectare de bromoxynil non estérifié. L'intérêt se situe sur le plan d'une réduction substantielle du coût du traitement.

EXEMPLE 11 : essais, sur blé tendre d'hiver

Des essais, en champ, sur blé tendre d'hiver ont été conduits sur 10 sites différents de façon à obtenir des conditions de végétation très variées les unes des autres pour pouvoir apprécier les réactions des plantes dans diverses conditions climatiques et de culture.

Des parcelles de 15 à 22 m² ont été semées avec diverses variétés de blé courant novembre. Les traitements ont été effectués courant mars au stade 2-3 feuilles. Des parcelles témoins non traitées ont été incluses toutes les deux parcelles traitées.

On a appliqué différentes compositions herbicides, formulées en concentré émulsionnable, émulsionnées dans l'eau à la dose de 500 l de bouillie par hectare (dose intermédiaire dans l'ensemble des doses appropriées).

On a mis en oeuvre un mélange émulsionnable d'esters conforme à l'invention contenant du n-heptanoate, du butyrate et du cékanoate de bromoxynil (mélange n, tableau E), du n-heptanoate, du butyrate et du cékanoate d'ioxynil (mélange p₁, tableau E), un concentré émulsionnable contenant 240 g/l de bromoxy-nil sous forme de n-octanoate et de butyrate et 240 g/l d'ioxynil sous forme de n-octanoate et de butyrate (mélange z, tableau F), un concentré émulsionnable contenant 240 g/l de bromoxynil et 240 g/l d'ioxynil mais cette fois-ci sous forme de n-heptanoate et de butyrate.

La composition de ce dernier concentré est donnée ci-après.

Proportions en esters d'oxynil (% moles)

n-heptanoate de bromoxynil 28
n-heptanoate d'ioxynil 33
n-butyrate de bromoxynil 22
n-butyrate d'ioxynil 17

Teneur en matière acitve dans le concentré émulsionnable (en g/l) 480

Proportions en agents émulsifiants dans le concentré émulsionnable en %

Galoryl EM 4039 5 %
Condensat de 20 moles OE sur huile de ricin 5 %
Solvant q.s.p. 100 % (p/p) Solvesso 200
(densité du concentré émulsionnable à 20°C = 1,265)

L'efficacité des compositions herbicides a été mesurée comme dans les exemples précédents (voir définition des notations donnée plus haut).

Les pourcentages volumiques nécessaires des produits concentrés rapport à l'eau pour pouvoir traiter les champs à 500 l/ha aux doses étudiées sont donnés dans le tableau CC suivant :

## TABLEAU CC

| Identifi-cation des concentrés utilisés | Composé | teneur matière active (g/l) | % vol. de produit formulé dans l'eau pour la dose de | |
|---|---|---|---|---|
| | | | 180 g/ha bromoxynil +180 g/ha ioxynil | 240 g/ha bromoxynil +240 g/ha ioxynil |
| n, tableau E + p₁, tableau E | Bromoxynil (n-heptanoate butyrate cekanoate) | 600 | 0,06 | 0,08 |
| | Ioxynil (n-heptanoate butyrate cekanoate) | 600 | + 0,06 | + 0,08 |
| z, tableau F | Ioxynil et bromoxynil (n-octanoate butyrate) | 480 | 0,15 | 0,2 |
| | Ioxynil et bromoxynil (n-heptanoate butyrate) | 480 | 0,15 | 0,2 |

Les résultats d'efficacité à 45 jours (pourcentage de réaction des mauvaises herbes détruites) sont donnés en moyenne par plante puis globablement pour l'ensemble des plantes présentes, dans le tableau DD suivant.

TABLEAU DD

| Composé | | Ioxynil/bromoxynil n-octanoate n-butyrate | | Ioxynil/bromoxynil n-heptanoate n-butyrate | | Ioxynil/bromoxynil n-heptanoate n-butyrate cekanoate | |
|---|---|---|---|---|---|---|---|
| Dose: bromoxynil g/ha ioxynil | | 180 180 | 240 240 | 180 180 | 240 240 | 180 180 | 240 240 |
| PLANTE | Nb champs concernés par la plante | Moyenne des notations | | | | | |
| Aphanes arvensis | 4 | 9 | 9 | 9 | 9 | 9 | 9 |
| Arabidopsis thaliana | 6 | 9 | 9 | 9 | 9 | 9 | 9 |
| Cerastium glomeratum | 8 | 6,7 | 6,8 | 6,8 | 7,4 | 7,2 | 7,2 |
| Matricaria inodora | 8 | 8,2 | 8,3 | 8 | 8,2 | 8 | 8,6 |
| Papaver Rhoeas | 6 | 9 | 8,5 | 8,7 | 9 | 8,7 | 9 |
| Polygonum aviculare | 6 | 7,5 | 8,3 | 7,5 | 8,6 | 7,6 | 8,6 |
| Polygonum convolvulus | 2 | 7 | 8 | 8 | 8 | 7 | 9 |
| Polygonum SPP · | 6 | 8 | 8 | 7,9 | 7,9 | 8,3 | 8,6 |
| Stellaria media | 10 | 6 | 5,7 | 6,3 | 6,5 | 5,5 | 6,5 |
| Veronica hederifolia | 8 | 6,6 | 6,7 | 6,8 | 7,4 | 5,4 | 6,2 |
| Veronica persica | 6 | 6,8 | 9 | 9 | 9 | 8,6 | 8,6 |
| Veronica tricolor | 4 | 7,2 | 6,2 | 6,2 | 6,7 | 7,7 | 9 |
| moyenne d'activité | | 7,6 | 7,8 | 7,7 | 8 | 7,6 | 8,2 |

41

Le mélange conforme à l'invention se comporte, du point de vue activité herbicide sur mauvaises herbes du blé, en champ, d'une manière comparable au mélange n-octanoate et n-butyrate de bromoxynil et d'ioxynil, d'une part, et au mélange n-heptanoate et n-butyrate de bromoxynil et d'ioxynil, d'autre part.

Il est à noter que les céréales d'hiver n'ont été affectées par aucun des herbicides à aucune des doses essayées.

Comme il va de soi et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

**Revendications**

1. Produits herbicides, caractérisés par le fait qu'ils comprennent un mélange d'un ou plusieurs esters d'acides linéaires et d'un ou plusieurs esters d'acides ramifiés de bromoxynil et/ou un mélange d'un ou plusieurs esters d'acides linéaires et d'un ou plusieurs esters d'acides ramifiés d'ioxynil, les acides linéaires étant choisis dans le groupe comprenant les acides n-heptanoïque, n-octanoïque et l'acide n-butyrique, et les acides ramifiés étant choisis dans le groupe comprenant les acides éthyl-2-hexanoïque et cékanoïc, la proportion d'esters d'acides linéaires de bromoxynil dans le mélange de ceux-ci avec les esters d'acides ramifiés de bromoxynil étant de 20 à 90% molaire, de préférence de 30 à 80% molaire, et la proportion d'esters d'acides linéaires d'ioxynil dans le mélange de ceux-ci avec les esters d'acides ramifiés d'ioxynil étant de 30 à 95% molaire, de préférence de 40 à 85% molaire, la proportion en esters d'acides ramifiés représentant chaque fois le complément à 100% molaire.

2. Produits herbicides selon la revendication 1, caractérisés par le fait que les acides linéaires utilisés sont l'acide n-heptanoïque ou l'acide n-octanoïque associé avec l'acide n-butyrique et que l'acide ramifié est l'acide éthyl-2-hexanoïque.

3. Produits herbicides selon la revendication 1, caractérisés par le fait que les acides linéaires utilisés sont l'acide n-heptanoïque ou l'acide n-octanoïque associé avec l'acide n-butyrique et que l'acide ramifié est l'acide cekanoic.

4. Procédé de préparation des produits herbicides selon l'une des revendications 1 à 3, caractérisé par le fait que les esters de bromoxynil et/ou d'ioxynil sont synthétisés séparément puis mélangés liquides et à chaud en proportions adéquates.

5. Procédé de préparation des produits herbicides selon l'une des revendications 1 à 3, caractérisé par le fait que l'on estérifie l'ioxynil et/ou le bromoxynil successivement ou simultanément à l'aide des différents agents estérifiants, à savoir les chlorures ou anhydrides des acides considérés.

6. Produits herbicides selon l'une des revendications 1 à 3, caractérisés par le fait qu'ils présentent une concentration de 100 à 900 g d'équivalent bromoxynil et de 100 g à 1100 g d'équivalent ioxynil par litre.

7. Produits herbicides selon l'une des revendications 1 à 3, caractérisés par le fait que la concentration en équivalent bromoxynil et/ou ioxynil est supérieure à environ 600 g/l et ne dépasse pas environ 900 g/l.

8. Produits herbicides selon l'une des revendications 1 à 3 et 6, caractérisés par le fait qu'ils comprennent un ou plusieurs solvants et des agents tensio-actifs ioniques ou non-ioniques.

9. Produits herbicides selon la revendication 8, caractérisés par le fait que le solvant est choisi parmi des huiles minérales à haute teneur en produits aromatiques et plus particulièrement celles ayant une teneur pondérale en produits aromatiques d'au moins 70% et un point éclair supérieur à 50°C.

10. Produits herbicides selon la revendication 8, caractérisés par le fait que les agents tensio-actifs sont présents dans la proportion de 0,1 à 20% en poids et sont constitués par des produits à base de condensats d'oxyde d'éthylène avec de l'oxyde de propylène ou avec des alkylphénols, par exemple nonyl ou octyl, ou polyarylphénols, ou avec des huiles végétables saponifiées ou non ou encore avec des alcools droits ou ramifiés, par exemple l'alcool laurique et par des esters carboxyliques d'anhydrosorbitols éventuellement polyéthoxylés, des sels alcalins, alcalino-terreux ou d'ammonium d'esters sulfuriques, des dérivés sulfoniques à haut poids moléculaire, tels les lignosulfonates ou les alkylbenzène-sulfonates de sodium et de calcium.

11. Produits herbicides selon l'une des revendications 1 à 3 et 6 à 10, caractérisés par le fait qu'ils contiennent un ou plusieurs autres herbicides comme les dérivés de la famille des biphényléthers dont le Bifénox (méthyl-(dichloro-2,4-phénoxy-nitro-2-benzoate), les dérivés de l'acide benzoïque dont le Dicamba (acide dichloro-3,6-méthoxy-2-benzoïque), les dérivés de l'acide picolinique dont l'acide dichloro-3,6-picolinique, les dérivés de triazines dont la cyanazine (chloro-4-éthylamino-6-triazin-1,3,5-yl-2-amino)-2-méthyl-2-propionitrile), et les esters d'isooctanol ou de butylglycol de l'acide (dichloro-2,4-phénoxy)-acétique, de l'acide (chloro-4-méthyl-2- phénoxy)-acétique, de l'acide (±) (chloro-4-méthyl-2- phénoxy)-2-propionique ou de l'acide (±) (dichloro-2,4- phénoxy)-2-propionique.

12. Fluide de pulvérisation applicable sur le terrain, caractérisé par le fait qu'il est obtenu par dilution ou émulsion dans l'eau des produits herbicides selon l'une des revendications 1 à 3 et 6 à 11, leur teneur en mélange d'esters linéaires et ramifiés de bromoxynil et/ou d'ioxynil étant de 0,05 à 5% en poids/volume.

13. Procédé de destruction des adventices caractérisé par le fait que l'on applique le fluide de pulvérisation selon la revendication 12 à une dose de 50 g à 1 kg/ha d'équivalent bromoxynil et/ou ioxynil.

## Claims

1. Herbicidal products characterized by the fact that they comprise a mixture of one or several linear acid esters and one or several branched acid esters of bromoxynil and/or a mixture of one or several linear acid esters and one or several branched acid esters of ioxynil, the linear acids being selected from the group comprising n-heptanoic, n-octanoic and n-butyric acids, the branched acids being selected from the group comprising 2-ethyl-hexanoic and cekanoic acids, the proportion of bromoxynil linear acid esters in the mixture of the latter with the bromoxynil branched acid esters being from 20 to 90% molar, preferably from 30 to 80% molar, and the proportion of ioxynil linear acid esters in the mixture of the latter with the ioxynil branched acid esters being from 30 to 95% molar, preferably from 40 to 85% molar, the proportion of branched acid esters representing each time the complement to 100% molar.

2. Herbicidal products according to claim 1, characterized by the fact that the linear acids used are n-heptanoic acid or n-octanoic acid associated with n-butyric acid and the branched acid is 2-ethyl-hexanoic acid.

3. Herbicidal products according to claim 1, characterized by the fact that the linear acids used are n-heptanoic acid or n-octanoic acid associated with n-butyric acid and the branched acid is cekanoic acid.

4. Process for the preparation of herbicidal products according to one of claims 1 to 3, characterized by the fact that the bromoxynil and/or ioxynil esters are synthesized separately then mixed liquid and hot in adequate proportions.

5. Process for the preparation of herbicidal products according to one of claims 1 to 3, characterized by the fact that the ioxynil and/or bromoxynil are esterified successively or simultaneously by means of different esterifying agents, namely chlorides or anhydrides of the acids concerned.

6. Herbicidal products according to one of claims 1 to 3, characterized by the fact that they have a concentration of 100 to 900 g of bromoxynil equivalent and from 100 to 1100 g of ioxynil equivalent per liter.

7. Herbicidal products according to one of claims 1 to 3, characterized by the fact that the concentration in bromoxynil and/or ioxynil equivalent is higher than about 600 g/l and does not exceed about 900 g/l.

8. Herbicidal products according to one of claims 1 to 3 and 6, characterized by the fact that they comprise one or several solvents and ionic or non-ionic surfactants.

9. Herbicidal products according to claim 8, characterized by the fact that the solvent is selected among mineral oils with a high content of aromatic substances and more particularly those having a content by weight of aromatic substances of at least 70% and a flash point above 50°C.

10. Herbicidal products according to claim 8, characterized by the fact that the surfactants are present in the proportion of 0.1 to 20% by weight and are constituted by products based on ethylene oxide condensates with propylene oxide or with alkylphenols, for example nonyl or octyl, or polyarylphenols, or with vegetable oils saponified or not or again with straight or branched alcohols, for example lauric alcohol and by anhydrosorbitol carboxylic esters possibly polyethoxylated, alkali, alkaline-earth or ammonium salts of sulphuric esters, sulphonic derivatives with high molecular weight, such as lignosulphonates or sodium and calcium alkylbenzene-sulphonates.

11. Herbicidal products according to one of claims 1 to 3 and 6 to 10, characterized by the fact that they contain one or serveral other herbicides like derivatives of the family of biphenylethers among which are Bifenox (methyl-2.4-dichloro-phenoxy-2-nitrobenzoate), the derivatives of benzoic acid among which are Dicamba (3.6-dichloro-2-methoxy-benzoic acid), the derivatives of picolinic acid among which are 3.6-dichloro-picolinic acid, the derivatives of triazines among which are cyanazine (4-chloro-6-ethylamino-1.3.5-triazin-2-yl-amino)-2-methyl-propionitrile), and the isooctanol or butylglycol esters of (2.4-dichloro-phenoxy)-acetic acid, of (4-chloro-2-methyl-phenoxy)-acetic acid, of (±) 2-(4-chloro-2-methyl-phenoxy)-propionic acid or of (±) 2-(2.4-dichloro-phenoxy)-propionic acid.

12. Spraying fluid applicable to the soil, characterized by the fact that it is obtained by dilution or emulsion in water of herbicidal products according to one of claims 1 to 3 and 6 to 11, their content of a mixture of linear and branched esters of bromoxynil and/or of ioxynil being from 0.05 to 5% by weight/volume.

13. Method of destroying adventitious species characterized by the fact that the spraying fluid according to claim 12 is applied at a dose of 50 g to 1 kg/ha of bromoxynil and/or ioxynil equivalent.

## Patentansprüche

1. Herbizide Mittel, dadurch gekennzeichnet, daß sie ein Gemisch aus einem oder mehreren Estern linearer Säuren und einem oder mehreren Estern verzweigter Säuren des Bromoxynils und/oder ein Gemisch aus einem oder mehreren Estern linearer Säuren und einem oder mehreren Estern verzweigter Säuren des Ioxynils umfassen, welche linearen Säuren aus der aus n-Heptansäure, n-Octansäure und n-Butansäure bestehenden Gruppe ausgewählt werden, und die verzweigten Säuren aus der aus Ethyl-2-hexansäure und Cekansäure bestehenden Gruppe ausgewählt werden, wobei der Anteil der Ester linearer Säuren des Bromoxynils im Gemisch dieser mit den Estern verzweigter Säuren des Bromoxynils von 20 bis 90 Mol-%, vorzugsweise von 30 bis 80 Mol-% beträgt, und der Anteil der Ester linearer Säuren des Ioxynils im Gemisch dieser mit den Estern verzweigter Säuren des Ioxynils von 30 bis 90 Mol-%, vorzugsweise von 40 bis 85 Mol-% beträgt, wobei der Anteil an Estern verzweigter Säuren jedesmal den Rest auf 100 Mol-% bildet.

43

2. Herbizide Mittel nach Anspruch 1, dadurch gekennzeichnet, daß die verwendeten linearen Säuren n-Heptansäure oder n-Octansäure gemeinsam mit n-Butansäure sind, und daß die verzweigte Säure Ethyl-2-hexansäure ist.

3. Herbizide Mittel nach Anspruch 1, dadurch gekennzeichnet, daß die verwendeten linearen Säuren n-Heptansäure oder n-Octansäure gemeinsam mit n-Butansäure sind, und daß die verzweigte Säure Cekansäure ist.

4. Verfahren zur Herstellung der herbiziden Mittel nach einem der Ansprüche 1 bis 3, dadurch gekennzeichnet, daß die Ester des Bromoxynils und/oder des loxynils getrennt synthetisiert werden und anschließend flüssig und in der Wärme in den entsprechenden Verhältnissen vermischt werden.

5. Verfahren zur Herstellung der herbiziden Mittel nach einem der Ansprüche 1 bis 3, dadurch gekennzeichnet, daß man das loxynil und/oder das Bromoxynil nacheinander oder gleichzeitig mittels verschiedener Veresterungsmittel, nämlich der Chloride oder Anhydride der betrachteten Säuren, verestert.

6. Herbizide Mittel nach einem der Ansprüche 1 bis 3, dadurch gekennzeichnet, daß sie eine Konzentration von 100 bis 900 g-Äquivalenten Bromoxynil und von 100 bis 1100 g-Äquivalenten loxynil je Liter aufweisen.

7. Herbizide Mittel nach einem der Ansprüche 1 bis 3, dadurch gekennzeichnet, daß die Konzentration in Äquivalent Bromoxynil und/oder loxynil mehr als etwa 600 g/l und nicht etwa 900 g/l übersteigt.

8. Herbizide Mittel nach einem der Ansprüche 1 bis 3 und 6, dadurch gekennzeichnet, daß sie ein oder mehrere Lösungsmittel und ionische oder nicht-ionische grenzflächenaktive Mittel umfassen.

9. Herbizide Mittel nach Anspruch 8, dadurch gekennzeichnet, daß das Lösungsmittel unter Mineralölen mit einem hohen Gehalt an aromatischen Produkten und ganz besonders unter jenen, welche einen Gewichtsgehalt von aromatischen Produkten von mindestens 70% und einen Flammpunkt höher als 50°C besitzen, ausgewählt ist.

10. Herbizide Mittel nach Anspruch 8, dadurch gekennzeichnet, daß die grenzflächenaktiven Mittel in einem Anteil von 0,1 bis 20 Gew.-% vorliegen und aus Produkten auf Basis der Kondensate von Ethylenoxid mit Propylenoxid oder mit Alkylphenolen, beispielsweise Nonyl- oder Octylphenolen, oder Polyarylphenolen, oder mit verseiften oder unverseiften pflanzlichen Ölen oder auch mit linearen oder verzweigten Alkoholen, beispielsweise Laurylalkohol sowie aus Carbonsäureestern von gegebenenfalls polyethoxylierten Anhydrosorbiten, sowie aus Alkali-, Erdalkali- oder Ammoniumsalzen von Schwefelsäureestern, aus Sulfonsäurederivaten mit hohen Molekulargewichten, wie Lignosulfonaten oder Alkylbenzolsulfonaten von Natrium und Kalzium gebildet sind.

11. Herbizide Mittel nach einem der Ansprüche 1 bis 3 und 6 bis 10, dadurch gekennzeichnet, daß sie ein oder mehrere andere Herbizide enthalten, wie die Derivate aus der Familie der Biphenylether, darunter Bifenox (Methyl-(dichlor-2,4-phenoxy-nitro-2-benzoat), die Derivate der Benzoesäure, darunter Dicamba (Dichlor-3,6-methoxy-2-benzoesäure), die Derivate der Picolinsäure, darunter Dichlor-3,6-picolinsäure, die Derivate von Triazinen, darunter Cyanazin (Chlor-4-ethylamino-6-triazin-1,3,5-yl-2-amino)-2-methyl-2-propionitril), und die Isooctanol- oder die Butylglykolester der (Dichlor-2,4-phenoxy)-essigsäure, der (Chlor-4-methyl-2-phenoxy)-essigsäure, der (±)(Chlor-4-methyl-2-phenoxy)-2-propionsäure oder der (±)(Dichlor-2,4-phenoxy)-2-propionsäure.

12. Auf dem Land anwendbare Zerstäubungsflüssigkeit, dadurch gekennzeichnet, daß sie durch Verdünnen oder Emulgieren in Wasser der herbiziden Mittel nach einem der Ansprüche 1 bis 3 und 6 bis 11 erhalten wird, deren Gehalt am Gemisch aus linearen und verzweigten Estern des Bromoxynils und/oder des loxynils von 0,05 bis 5% Gewicht/Volumen beträgt.

13. Verfahren zur Vernichtung wild wachsender Pflanzen, dadurch gekennzeichnet, daß man die Zerstäubungsflüssigkeit nach Anspruch 12 in einer Dosis von 50 g bis 1 kg-Äquivalent/ha Bromoxynil und/oder loxynil anwendet.

44